# EUROPEAN PATENT SPECIFICATION

(11) **EP 3 983 658 B1**
(45) Date of publication and mention of the grant of the patent: **30.10.2024**
(21) Application number: 20821832.1
(22) Date of filing: 10.06.2020
(51) Int. Cl.: F01M 1/08, F01M 1/16, F16N 7/34, F16N 7/38

(54) **MULTIPLE-OIL INJECTOR, A LARGE ENGINE WITH SUCH INJECTOR, METHOD OF LUBRICATING AND USE THEREOF**
MEHRÖLINJEKTOR, GROSSER MOTOR MIT EINEM SOLCHEN INJEKTOR, VERFAHREN ZUR SCHMIERUNG UND VERWENDUNG DAVON
INJECTEUR MULTI-HUILE, MOTEUR DE GRANDE DIMENSION DOTÉ D'UN TEL INJECTEUR, PROCÉDÉ DE LUBRIFICATION ET UTILISATION DE CEUX-CI

(30) Priority: 11.06.2019 DK PA201970365
(43) Date of publication of application: 20.04.2022
(73) Proprietor: Hans Jensen Lubricators A/S, 9560 Hadsund (DK)
(72) Inventor: KRISTENSEN, Nikolaj, 9000 Aalborg (DK)
(74) Representative: Patrade A/S
(86) International application number: PCT/DK2020/050165
(87) International publication number: WO 2020/249175

(56) References cited:
- EP-A1- 2 395 208
- EP-A1- 3 404 224
- EP-A1- 3 404 224
- WO-A1-2010/149162
- WO-A1-2014/127895
- WO-A1-2016/173601
- WO-A1-2016/173601
- DK-B1- 179 764
- JP-A- H11 294 133
- JP-A- S6 032 917
- JP-A- S62 111 109

## Description

### FIELD OF THE INVENTION

The present invention relates to a large combustion engine, for example large slow-running two-stroke engine, and a method of lubricating such engine selectively with one lubricant or another, as well as a lubricant injector for such engine and use thereof.

### BACKGROUND OF THE INVENTION

Due to the focus on environmental protection, efforts are on-going with respect reduction of emissions from marine engines. This also involves the steady optimization of lubrication systems for such engines, especially due to increased competition. One of the economic aspects gaining increased attention is a reduction of oil consumption, not only because of environmental protection but also because this is a significant part of the operational costs of ships. A further concern is proper lubrication despite reduced lubricant volume because the longevity of engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings.

An example of a lubricant injector for a marine engine is disclosed in EP1767751, in which a non-return valve is used to provide the lubricant access to the nozzle passage inside the cylinder liner. The non-return valve comprises a reciprocating springpressed ball in a valve seat just upstream of the nozzle passage, where the ball is displaced by pressurised lubricant. The ball valve is a traditional technical solution, based on a principle dating back to the start of the previous century, for example as disclosed in GB214922 from 1923.

An alternative and relatively new lubrication method, compared to traditional lubrication, is commercially called Swirl Injection Principle (SIP). It is based on injection of a spray of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of, typically, 35-40 bar, which is substantially higher than the oil pressure of less than 10 bar that are used for systems working with compact oil jets that are introduced into the cylinder. In some types of SIP valves, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in a circle around the cylinder, and each injector comprises one or more nozzle apertures at the tip for delivering lubricant jets or sprays into the cylinder from each injector. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601.

The above mentioned WO2012/126473 and WO2016/173601, and also EP1426571 and EP1586751 disclose electromechanical outlet-valves of lubricant injectors. An electrical coil exerts an electromagnetic force on the outlet-valve member, which is equipped with a correspondingly electromagnetic responsive part. At excitation, the outlet-valve member is withdrawn from its valve seat at the nozzle aperture and opens for flow of lubricant from a lubricant source and passing the valve member and out of the nozzle. In practice, the outlet-valve member with the electromechanical responsive part is relatively long and has a mass that causes a slight delay in the action on the outlet-valve member.

As discussed in detail in EP3404224, dual fuel marine diesel engines require shift of lubricant when shifting between the specific fuels. As a technical solution, a system is disclosed in which two oil reservoirs with different oils are arranged upstream of a pump which receives and pressurizes the selected oil and supplies is to the injectors. Selection of the oil is achieved by a three-way valve between the pump and the two oil reservoirs. The system of EP3404224 fulfils the purpose of switching between oils when the type of fuel is changed. However, a quick switch from one oil to another is not possible because the oil tube from the valve through the pump and to the injector must first be emptied from one oil before the next type of oil can be injected.

A different system for selection of oil for injection is disclosed in WO2014/127895 where the cylinder is equipped with multiple injectors in the cylinder, for example injector pairs, so that one set of injectors is used for one type of oil and a second set of injectors for another type of oil. The advantage is that the base number (BN) of the oil can be adjusted by injecting two types of oils into the cylinder at a predetermined ratio without having to premix the oils. The injection is preferably such that the different oil jets are crossing so as to achieve a mixing right after injection. It is also disclosed that a nozzle can be used for injecting multiple oils by providing a sequence of portions of different oils in a supply tube and injecting the entire sequence into the cylinder.

Japanese patent document JPS62111109 discloses a dual oil system for lubrication, where two pumps are used for providing either one oil or another to the nozzles. Also, in this case, long supply lines imply the above-mentioned uncertainty in timing and injection volume.

However, these principles are not optimum when high pressure and quick reaction is required, such as for SIP injection, because the oil supply lines are relatively long and may be subject to minute expansion and contraction when pressure is applied and released from the tubes, which leads to uncertainty in timing and injected volume. This problem is discussed in general in DK179764. It would therefore be desirable to provide a system with shorter reaction times for mixing oils inside the cylinder.

### DESCRIPTION / SUMMARY OF THE INVENTION

It is the objective of the invention to provide an improvement in the art. A particular objective is to provide a better speed and volume control of lubricant ejection by the injector even when the type of lubricant is changed between or within injection cycles. Especially, it is the objective to improve lubrication with SIP valves in large combustion engines, for example in a large slow-running two-stroke engine. However, the injectors may also be used in large four-stroke combustion engines, for example marine engines or combustion engines for power plants. These objectives are achieved by a large combustion engine, for example slow-running two-stroke engine, with a plurality of injectors, a method for lubricating such an engine and by an injector for such engine and method and use thereof as set forth in the following.

The injector is peculiar in comprising two or more lubricant inlets for injection of two or more different types of lubricant and an actuator-driven selection-valve system inside the injector for selecting among the two or more different types of lubricant for injection into the cylinder in an injection-phase.

In order to fully understand the invention, it is pointed out that it has been discovered that lubricant conduits of a substantial length from a pumping system to the cylinder with the plurality of injectors introduce imprecision of the system. Long conduits tend to expand and retract slightly when being exposed to highly pressurised lubricant, which leads to slight uncertainties in timing and volume of injected lubricant. Furthermore, the lubricant is subject to minute compression and expansion during an injection cycle, which adds to the effect. Although, this effect is small, it introduces errors in the range of milliseconds for the injection, which is substantial in comparison to the short SIP injection time, which can be as short as 10 milliseconds or less. Such effect of imprecise timing has substantial influence on SIP lubrication systems due to the high lubricant pressure and the short injection periods. Also, it is noticed that the injection amount is typically regulated by the time length in which pressurised oil is supplied to the nozzle in an injection cycle, in which case, uncertainty factors that affect a precise timing should be minimised, if not eliminated. Improvement with respect to the injection is achieved with an injector as described herein because the selection-valve system is inside the injector, which results in the distance from the selection-valve system to the nozzle being short.

### Definitions

The term "injection-phase" is used for the time during which lubricant is injected into the cylinder by an injector. The term "idle-phase" is used for the time between injection-phases. The term "idle state" is used for the state of a component in the idle-phase. The term "idle-phase position or orientation" is used for the position or orientation of a movable component when in the idle state during the idle-phase, which is in contrast to an injection-phase position. The term "injection cycle" is used for the time it takes to start an injection sequence and until the next injection sequence starts. For example, the injection sequence comprises a single injection, in which case the injection cycle is measured from the start of the injection-phase to the start of the next injection-phase. Alternatively, the injection sequence comprises multiple injections, for example multiple injections above the piston before the piston passes the injectors on its way to the TDC, for example a first injection with one lubricant followed by another injection of another lubricant, and potentially further lubricants and/or additives. Such double or multiple injections leads to oil mixing in the cylinder before the piston reaches the TDC. For example, there is one injection cycle for each revolution of the engine. However, it is also possible to have one injection cycle after a number of revolutions.

The internal selection-valve system of the injector doses the amount of the selected lubricant for injection by the time during which the selection-valve system stays open in the injection-phase. The time is determined by the controller, for example through electrical signals to the injector in order to control its internal actuator that is used for causing injection, if the latter is of an electrically controlled type.

Optionally, volume meters can be employed either for the total consumption of all the injectors on a cylinder or for a subgroup of injectors during the injection-phase.

The term "timing" of the injection is used for the adjustment of the start of the injection-phase by the injector relatively to a specific position of the piston inside the cylinder.

The term "frequency" of the injection is used for the number of repeated injections by an injector per revolution of the engine. If the frequency is unity, there is one injection per revolution. If the frequency is 1/2, there is one injection per every two revolutions. This terminology is in line with the above mentioned prior art.

For sake of convenience, the term "forward" is used for the direction towards the nozzle aperture and the oppositely direction away from the nozzle aperture is called "rearward".

The term "pressurized lubricant" is used for lubricant provided at a pressure high enough that it can be used for injection as a jet or spray into the cylinder. The latter is in contrast to oil injection by quills between piston rings. The pressure depends on the purpose and form of injection and is typically above 10 bar. For SIP injection, the pressure is typically higher, for example above 25 bar.

### Practical embodiments

The large engine, for example slow-running two-stroke engine, optionally a marine engine or engine for a power plant, comprises a cylinder with a reciprocal piston inside and with a plurality of lubricant injectors fixed to a wall of the cylinder and extending through the cylinder wall. The injectors are distributed along a perimeter of the cylinder and configured for injection of lubricant into the cylinder at various positions on the perimeter during injection-phases. For example, the large engine, such as slow-running two-stroke engine, is a marine engine or a large engine in power plants. Typically, the engine is burning diesel or gas fuel, for example natural gas fuel.

The engine comprises also a first lubricant supply with a first pressurized lubricant, typically pressurized by a first lubricant feed pump, and the engine comprises a second lubricant supply with a second pressurized lubricant, typically pressurized by a second lubricant feed pump. The first lubricant is of a different type than the second lubricant. Optionally, the engine comprises more than two lubricant supplies with correspondingly more than two different types of lubricant, and correspondingly more than two lubricant feed pumps. For example, the engine comprises a third lubricant supplies and correspondingly a third lubricant feed pump.

Each of the plurality of injectors is connected with each of its two or more lubricant inlets to one of the two or more lubricant supplies through a corresponding feed conduit. Each lubricant supply includes a potential pressure source, typically lubricant pump, which raises the pressure of the corresponding lubricant to an adequate level. For the described system, it suffices to provide a constant lubricant pressure at the corresponding lubricant inlet of the injector.

The injectors are configured for selecting injection of the type of lubricant to be injected among the different types of lubricants from the various lubricant inlets, for example two or more than two, optionally up to ten types. The inlets can be used to provide and add not only lubricants but also potential additives. For example, the injector optionally has three inlets of which two are used for lubricants, such as lubrication oils, and one is used for an additive.

The engine further comprises a controller. The controller is configured for controlling the selection of the lubricant for injection and the amount and timing of the injection of the first and second lubricant by the plurality of injectors. Optionally, also the injection frequency is controlled by the controller. For precise injection, it is an advantage if the controller is electronically connected to a computer or comprises a computer, where the computer is monitoring parameters for the actual state and motion of the engine. Such parameters are useful for the control of optimized injection. Optionally, the controller is provided as an add-on system for upgrade of already existing engines. A further advantageous option is a connection of the controller to a Human Machine Interface (HMI) which comprises a display for surveillance and input panel for adjustment and/or programming of parameters for injection profiles and optionally the state of the engine. Electronic data connections are optionally wired or wireless or a combination thereof.

In a concrete embodiment, the injector comprises a first lubricant inlet for receiving the first lubricant from a first lubricant feed conduit for injection of the first lubricant into the cylinder and a second lubricant inlet for receiving the second lubricant from a second lubricant feed conduit for injection of the second lubricant into the cylinder. The first lubricant inlet of the injector is connected to the first lubricant supply though the first feed conduit, and the second lubricant inlet is connected to the second lubricant supply through the second lubricant feed conduit. Potentially, the injector further comprises a third inlet, and optionally further inlets, for receiving lubricants or additives from a corresponding third feed conduit, and optionally further feed conduits, and injection of the lubricant or additive into the cylinder.

The injector has a lubricant flow path from the first and second lubricant inlet to the at least one nozzle for lubricant flow from the first and second lubricant inlet through the at least one nozzle into the cylinder. The injector is configured for selecting between injection of the first or the second lubricant, and optionally simultaneous injection of both the first and second lubricant, into the cylinder by the injector. If the injector comprises more than to inlets and there are more than two supplies for lubricant and additive, the injector is configured for selecting among injection from these more than two inlets, for example injection from only one inlet at a time. In some embodiments, injector is additionally configured for injection of at least two lubricants or lubricantadditive combinations, simultaneously.

The injector comprises one nozzle or more than one nozzle, for example two nozzles. Each nozzle has a nozzle aperture, extending into the cylinder for lubricant injection in an injection-phase. Optionally, a nozzle has more than a single aperture. For example, nozzles with multiple apertures are disclosed in WO2012/126480. In some embodiments, the injector comprises a single nozzle with a single nozzle aperture.

In particular, each injector comprises an internal actuator-driven selection-valve system in the lubricant flow path, wherein the selection-valve system is configured for selectively switching from the idle state without injection to an injection state with injection of the first lubricant or injection of the second lubricant, or optionally further lubricants or additives from further lubricant inlets, into the cylinder through the at least one nozzle in the injection-phase in dependence of the received injection-phase signals.

Each injector comprises an actuator for driving the selection-valve system. The actuator is functionally connected to the controller and configured for being activated by the controller for selectively driving the selection-valve system and causing injection of the first lubricant or the second lubricant under control by the controller as a consequence of the activation of the actuator by the controller. In further embodiments, more than one lubricant is injected at the same time by the injector. The selection-valve system, under control by the controller, is used for selecting which and how many of the lubricants and/or additives are injected and in which sequence.

In operation, the actuator is activated by the controller for starting an injection-phase with the first lubricant or with the second lubricant. As a consequence thereof, the selection-valve system is caused to open for flow of the first or the second lubricant through the flow path and injecting the first or second lubricant into the cylinder. At the end of the injection-phase, the actuator is caused to close the selection-valve system and stop lubricant supply. In some embodiments, the selection-valve is configured for opening for flow from both inlets for injection of both lubricants simultaneously. Potentially, multiple oils and potential additives are even mixed prior to injection.

Optionally, the injection phase comprises multiple injections, for example multiple injections above the piston before the piston passes the injectors on its way to the TDC, for example a first injection with one lubricant followed by another injection of another lubricant, and potentially further lubricants and/or additives. Such double or multiple injections, especially when in SIP operation, leads to oil mixing in the cylinder before the piston reaches the TDC. The variety of selecting lubricant for injection and its timing as controller by the controller makes a high variety of injection sequences possible, for example combinations of at least two of:
- one or more injections under the piston,
- one or more injections onto the piston,
- one or more injections above the piston during a single injection cycle.
For the various injections, also the selections for the lubricant or lubricants, potentially with additives, can be varied,
For example, the actuator is an electrically controlled actuator and is electrically connected to the controller by an electrical connection for receiving injection-phase signals from the controller, the injection-phase signals indicating selection between the first or second lubricant for injection as well as timing for the injection. For the injection-phase, an electrical control signal is sent from the controller to each of the injectors for starting an injection-phase with the first lubricant or the second lubricant, or potentially further lubricants. As a consequence thereof, the selection-valve system opens for flow of the corresponding lubricant through the flow path and injects it into the cylinder. At the end of the injection-phase, the electrical control signal from the controller to the injector is changed, causing the selection-valve system to close for lubricant injection and return to the idle state.

Optionally, the actuator comprises an electrical solenoid arrangement with a stationary solenoid part and a movable solenoid part. The selection-valve system is connected to the movable solenoid part for being driven by the actuator upon electrical excitation of the solenoid, wherein the solenoid is configured for excitation by the injection-phase signals from the controller.

The term "a solenoid coil" should be understood as "at least one solenoid coil", as it is possible and in some cases advantageous to use more than one coil, for example two or three coils.

The term "signal" from the controller is used her for an electrical current that flows from the controller to the injector. In some embodiments, the signal itself can be used for driving the actuator, for example an electromechanical actuator, if the current is sufficiently strong. For example, for switching the driving direction of an electromechanical actuator, the direction of the current is switched to an opposite direction. However, alternatively, the injector could comprise an electro-switch where the signal from the controller opens for flow of a current sufficiently strong to drive the actuator. In the latter case, the signal lines from the controller to the electro-switch can be accomplished by very thin wiring.

Alternatively, the actuator is a hydraulic or pneumatic actuator. Such hydraulic or pneumatic actuator in the injector is, optionally, also electrically controlled. For example, an electrical signal from the controller to the injector causes an electromechanical actuator-valve of the injector to open for hydraulic or pneumatic flow into the actuator for driving the selection-valve system hydraulically or pneumatically. Optionally, an electrical signal from the controller to the injector causes an electromechanical actuator-valve to open for hydraulic or pneumatic flow into the actuator for driving the actuator itself, which then, in turn, by a mechanical connection drives the selection-valve system.

In some embodiments, the selection-valve system is configured to select only one inlet at a time among multiple inlets for supply of lubricant and for injection thereof. In some embodiment, alternatively or in addition, the selection-valve system is configured to select more than one inlet at a time among multiple inlets for supply of lubricant and for injection thereof in order to inject simultaneously multiple lubricants or lubricant in combination with additive.

In some embodiments, the injector has more than one nozzle, and multiple lubricants and additives can be injected into the cylinder through separate nozzles of the injector. In other embodiments, multiple lubricants and additives are injected into the cylinder through a single nozzle and potentially mixed inside the injector prior to ejection from the nozzle aperture.

In practical embodiments, the injector comprises a base and a rigid, optionally cylindrical, flow chamber, which is rigidly connecting the base with the nozzle for fixing the nozzle inside the cylinder wall when the base is fixed to the cylinder wall. Due to the base being provided at the opposite end of the flow chamber relatively to the nozzle, it is typically located on or at the outer side of the cylinder wall. For example, the injector comprises a flange at the base for mounting onto the outer cylinder wall. Alternatively, in order to mount the injector in the cylinder wall, the injector comprises a flange provided around the flow chamber. For example, the flange is bolted against the cylinder wall.

Advantageously, the base comprises the first and second inlet and the potential further inlets. The flow chamber is hollow and contains the flow path for lubricant flow from the first and second, and potentially further, lubricant inlet through the flow chamber and to the nozzle for injection of the corresponding lubricant into the cylinder. Optionally, the selection-valve member is located in the flow chamber or in the base.

For example, the actuator is provided outside the cylinder wall when the injector is mounted at the cylinder wall. Optionally, it is fixed to the base.

In some embodiments, the selection-valve system comprises a movable selection-valve member that is connected to the actuator for being driven by the actuator from an idle-phase position or orientation, in which the selection-valve member in the idle-phase blocks the flow path, selectively to a first or second injection-phase position or orientation, wherein the selection-valve member in dependence of the injection-phase signal and the corresponding injection-phase position or orientation opens the flow path either for the first lubricant in the first injection-phase position or orientation or for the second lubricant in the second injection-phase position or orientation for flow thereof into the cylinder in the injection-phase.

In practice, the injection-phase signal is received by the actuator, causing the actuator to move the selection-valve member in dependence of the injection-phase signal to a first or second injection-phase position or orientation, which leads correspondingly to opening of the flow path for injection of the first or second lubricant into the cylinder.

For example, the actuator is mechanically connected to the selection-valve member by an actuator extension for driving the selection-valve member by the actuator extension. This is advantageous if the selection-valve member is located in the flow chamber and, thus, inside the cylinder wall, whereas the actuator is located outside the cylinder wall. In this embodiment, the operation comprises moving the selection-valve member by the actuator by using the actuator extension.

In some embodiments, the flow path comprises a first canal from the first inlet to the selection-valve system and a second canal from the second inlet to the selection-valve system, and a third canal from the selection-valve system towards the nozzle aperture. In practice in these embodiments, the operation comprises selectively opening for flow of the first lubricant from the first canal or the second lubricant from the second canal, optionally flow from both canals simultaneously, into the third canal towards the nozzle aperture by the selection-valve system.

### Outlet valve system

Optionally, each of the injectors comprises an outlet-valve system at the nozzle configured for opening for flow of lubricant to the nozzle aperture during an injection-phase upon pressure rise above a predetermined limit at the outlet-valve system and for closing the outlet-valve system after the injection-phase when the pressure drops. The outlet-valve system closes off for back-pressure from the cylinder and also prevents lubricant to enter the cylinder in the idle-phase between injection-phases. In addition, the outlet-valve system assists in a short closing time after injection, adding to precision in timing and volume of injected lubricant.

In these embodiments, the injector comprises a lubricant flow path from the lubricant inlets through the selection-valve system and to the outlet-valve system for flow of the lubricant from the lubricant inlets, through the selection-valve system and the outlet-valve system and out of the injector at the nozzle aperture. The selection-valve system is arranged as part of the injector upstream of and optionally spaced from the nozzle. Optionally, the selection-valve system is arranged upstream of and spaced from the outlet-valve system.

For example, the outlet-valve system comprises an outlet non-return valve. In the outlet non-return valve, the outlet-valve member, for example a ball, ellipsoid, plate, or cylinder, is pre-stressed against an outlet-valve seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve member is displaced from its outlet-valve seat, and the outlet non-return valve opens for injection of lubricant through the nozzle aperture into the cylinder. For example, the outlet-valve spring acts on the outlet-valve member in a direction away from the nozzle aperture, although, an opposite movement is also possible.

For example, for lubricating the engine, the method comprises sending an electrical control signal from the controller to the injector and by the control signal causing the injector to open the selection-valve system for flow of one selected type of lubricant from the corresponding lubricant feed conduit through the corresponding lubricant inlet, through the selection-valve system, and into a conduit that flow-connects the selection-valve system with the outlet-valve system.

It is noted that the pressure of the lubricants in the various lubricant feed conduits is above the predetermined limit that determines the opening of the outlet-valve system in order for the lubricant feed conduit to provide lubricant through the selection-valve system with a pressure sufficiently high to open the outlet-valve system in the injection-phase. Accordingly, the lubricant flow through the selection-valve system and into the conduit between the selection-valve system and the outlet-valve system causes a pressure rise at the outlet-valve system, causing the outlet-valve system to open for flow of lubricant from the conduit to the nozzle aperture by which lubricant is injected into the cylinder through the nozzle aperture. At the end of the lubrication period, the electrical control signal from the controller is changed, causing the selection-valve system to close again for lubricant supply from the selected lubricant inlet to the nozzle aperture. The pressure in the conduit decreases again, and the outlet-valve system closes.

In these embodiments, there are at least two valve systems in the injector. The selection-valve system is regulated under control by the controller, for example by electrical signals from the controller, and the outlet-valve system is activated only by the elevated pressure of the lubricant at the outlet-valve system, once the selection-valve system has opened and caused flow of lubricant at elevated pressure from the lubricant feed conduit to the outlet-valve system. There is no mechanical connection that couples the movable parts of the selection-valve system with movable parts of the outlet-valve system. Coupling between the opening and closing of these two systems is done only by the lubricant that flows from the selection-valve system to the outlet-valve system.

### Optional details of selection-valve and actuator

In some practical embodiments, the selection-valve system comprises a movable, actuator-driven selection-valve member arranged for moving from an idle-phase position, in which the selection-valve member in the idle-phase blocks the flow path, to an injection-phase position, in which the selection-valve member opens the flow path for flow of a selected lubricant through the flow path in the injection-phase. Advantageously, the selection-valve member is pre-stressed towards an idle-phase position by an selection-valve spring.

In some embodiments, for driving the movable selection-valve member, the injector comprises a movable and actuator-driven rigid actuator-extension that is connecting the actuator with the selection-valve system and which is used by the actuator for displacing or rotating the selection-valve member from an idle-phase position, in which the selection-valve member blocks the flow path, to an injection-phase position, in which the selection-valve member opens the flow path for flow of a selected lubricant through the flow path for injection of the selected lubricant into the cylinder in an inj ection-phase.

Optionally, the actuator-driven rigid actuator-extension is a pull-push-member for selectively pulling or pushing the selection-valve member in the injection-phase for by pulling selecting one of the lubricants for injection and by pushing selecting another of the lubricants for injection. Alternatively, the actuator extension is a rotational member transferring the driving force from a rotational actuator for example selectively in one direction or the other.

In some embodiment, the actuator is an electrically controlled actuator, for example an electromechanical actuator. Optionally, the actuator comprises an electrical solenoid arrangement with a stationary solenoid part and a movable solenoid part and wherein the actuator-extension is connected to the movable solenoid part for being driven by electrical excitation of the solenoid, wherein the solenoid is configured for excitation by the injection-phase signals from the controller.

For example, the selection-valve system comprises a linear actuator for driving the actuator-extension. In this case, the actuator-extension is connected to the actuator, for example to an arrangement of a solenoid-plunger and solenoid coil, for upon electrical activation of the actuator to drive the actuator-extension, for example pull-push-member for by either pushing or pulling the selection-valve member to open for flow from one or the other lubricant inlet, respectively. Optionally, the actuator-extension is connected to the solenoid-plunger, whereas the solenoid coil is stationary in the injector. Alternatively, the actuator-extension is connected to the solenoid coil, which is movable together with the actuator-extension.

As alternative, piezo-electric elements can be used for driving the selection-valve member. Such elements are electrically connected to the controller for being controlled by the controller with respect to when to contract or expand.

In some concrete embodiments, the selection-valve member is cylindrical and comprises a stationary valve member, which, in turn, comprises a corresponding cylindrical bushing inside which the cylindrical selection-valve member is arranged for displacement along a longitudinal axis of the bushing or arranged for rotation about longitudinal axis of the bushing.

The term cylindrical bushing is used for describing that the bushing has a cylindrical hollow, typically but not necessarily with a circular cross section. The cylindrical selection-valve member fits tightly into the cylindrical hollow of the bushing so that no lubricant can flow between the cylindrical selection-valve member and the cylindrical bushing apart from a potential minimal amount that is only lubricating the selection-valve member inside the bushing and which is negligible as compared to the amount of lubricant injected into the cylinder.

In some concrete embodiments, the selection-valve member comprises at least one throughput section arranged for connecting the first canal with the third canal when the selection-valve member is in the first position or orientation and for connecting the second canal with the third canal when the selection-valve member is in the second position or orientation. In practical embodiments, the operation comprises selectively connecting the first canal with the third canal when the selection-valve member is in the first position or orientation or connecting the second canal with the third canal when the selection-valve member is in the second position or orientation in dependence of the injection-phase signal.

In some embodiments, the throughput section is provided as a narrowing section on an outer side of the selection-valve member for flow of the first lubricant from the first canal or the second lubricant from the second canal through the narrowing section along the outer side of the selection-valve member inside the bushing into the third canal in the injection-phase.

### System advantages

The system as described herein has a number of advantages.

By providing a selection-valve system, and optionally and outlet-valve system, inside the injector, the mass of movable members that has to be moved during operation is low. The low mass reduces reaction time of the movable objects as compared to prior art systems, why the system implies an increased reaction speed and corresponding precision with respect to timing and amount.

As the injector has a length that is typically in the order of less than a few times, for example two times, the thickness of the cylinder wall of such large engine and is extending through an opening in the cylinder wall, the distance from the selection-valve system to the nozzle aperture is typically in the order of the thickness of the cylinder wall or even less. For example, the distance from the selection-valve system to the nozzle aperture is less than 20 cm or even less than 10 cm, which is much shorter than the distance of several meters between a three way valve and the nozzle in the prior art. This implies that the distance from the selection-valve system to the nozzle exit is extremely short in comparison and the selection-valve system has correspondingly short reaction times and precision.

Due to the selection-valve system being inside the injector housing and close to the nozzle, the injector has a short reaction time such that high precision can be achieved for injection timing and time length, the latter translating into volume for injection. Due to the high timing precision and the fast reaction time, the lubricant injection in a single injection-cycle can be done with multiple partial injections with different oils. This is in contrast to prior art systems in which an outlet-valve system is provided in the injector and a valve system for selectively feeding the injector is provided remote from the injector, for example as disclosed in the above-mentioned EP3404224. As the injector as described above only has a short and rigid flow channel from the selection-valve system to the nozzle, for example including an outlet-valve system, uncertainties and imprecisions of the injection amount and the timing are minimized in that minute compression and expansion of the oil in the relatively long conduits are avoided as well as expansion of the conduits themselves.

For example, in the time span before the piston of the engine passes the injectors, a double injection can be made so that two types of lubricant are mixed in the cylinder, especially when using the SIP principle. Whereas the prior art disclosed in EP3404224 uses crossing jets in order to mix oils, this is not necessary for SIP injection with an injector as described herein, as the droplets of the two or more types of lubricants from a single injector get mixed in the lubricant swirl and are distributed in mixed conditions onto the cylinder wall.

The system does only need a single lubricant line to the injectors for each type of lubricant, as there is no need for a return line, which minimizes costs and efforts for installation and minimizes the risk for faults. This is especially so because the engines are large and would require return lines of several meters length. Also, imprecision in time a volume when closing the valve due to dead volume in a potentially return pipe for the lubricant is avoided.

Due to the outlet valve system with the no-return valve, injectors are stable against high pressure from the cylinder. In case that the outlet-valve system comprises a non-return valve in or at the nozzle, and the non-return valve comprises a valve member, for example ball, which is spring pressed against a valve seat, a high degree of robustness against failure has been observed. These systems are simple, and the risk for clogging is minimal. Also, the valve seats tend to be self-cleaning and subject to little uneven wear, especially for valve members being balls, why a high and long-term reliability is provided. Accordingly, the injector is simple and reliable, quick and precise, and easy to construct from standard components with low production costs.

As a conclusion, the specific valve system is acting fast due to its light-weight components. Furthermore, the components are relatively simple in construction and imply low production costs. In addition to these advantages, the valve system is reliable, robust, and has a low risk for clogging. As the components are subject to relatively small pressure load, the valve system also has a long lifetime.

### Optional parameters

For example, the injectors comprise a nozzle with a nozzle aperture of between 0.1 and 1 mm, for example between 0.2 and 0.5mm, and are configured for ejecting a spray of atomized droplets, which is also called a mist of oil.

A spray of atomized droplets is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC. The atomization of the spray is due to highly pressurized lubricant in the lubricant injector at the nozzle. The pressure is higher than 10 bar, typically between 25 bar and 100 bar for this high pressure injection. An example is an interval of between 30 and 80 bar, optionally between 35 and 60 bar. The injection time is short, typically in the order of 5-30 milliseconds (msec). However, the injection time can be adjusted to 1 msec or even less than 1 msec, for example down to 0.1 msec. Therefore imprecisions of only a few msec may alter the injection profile detrimentally, why high precision is required, as already mentioned above, for example a precision of 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bar at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
- FIG. 1: is a sketch of part of a cylinder in an engine;
- FIG. 2: is a diagram for en optional selection-valve system with a) spring load and b) without spring load;
- FIG. 3: is a drawing of an example of the injector in a) an idle state, b) with injection of the first lubricant, and c) injection of the second lubricant;
- FIG. 4: is an enlarged drawing of a selection-valve system suitable for the injector of FIG. 3 when the injector is in a) an idle state, b) with injection of the first lubricant, and c) injection of the second lubricant;
- FIG. 5: illustrates an alternative example of the outlet valve;
- FIG. 6: is a drawing of an alternative example of an injector with rotational selectionvalve member in a) an idle state, b) with injection of the first lubricant, and c) injection of the second lubricant;
- FIG. 7: is an enlarged drawing of a selection-valve system suitable for the injector of FIG. 6 when the injector is in a) an idle state, b) with injection of the first lubricant, and c) injection of the second lubricant.

### DETAILED DESCRIPTION / PREFERRED EMBODIMENT

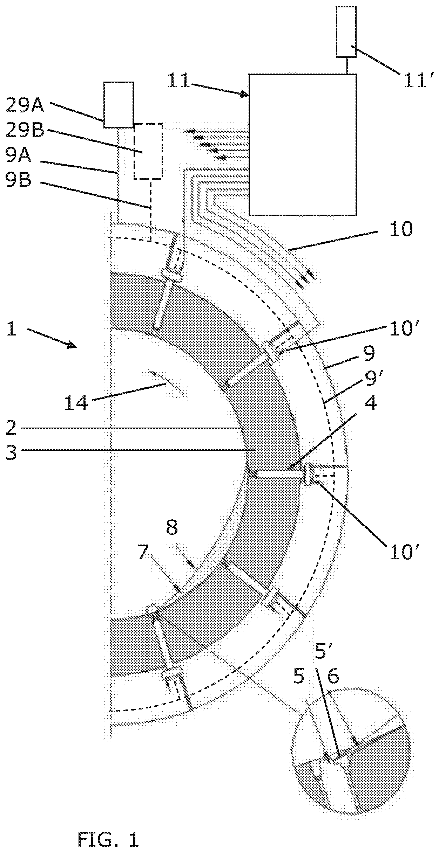

FIG. 1 illustrates one half of a cylinder 1 of a large engine, optionally a slow-running two-stroke engine, for example marine engine or engine for a power plant.

The cylinder 1 comprises a cylinder liner 2 on the inner side of the cylinder wall 3. Inside the cylinder wall 3, there are provided a plurality of lubricant injectors 4 for injection of lubricant into the cylinder 1. As illustrated, the injectors 4 are mounted to the cylinder wall 3 and distributed along a circular perimeter with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

Each of the injectors 4 has a nozzle 5 with a nozzle aperture 5' from which lubricant, for example as a fine atomized spray 8 of lubricant with miniature droplets 7 is ejected under high pressure into the cylinder 1.

For example, the nozzle aperture 5' has a diameter of between 0.1 and 0.8 mm, such as between 0.2 and 0.5 mm, which at a pressure of 10-100 bar, for example 25 to 100 bar, optionally 30 to 80 bar or even 50 to 80 bar, atomizes the lubricant into a fine spray 8, which is in contrast to a compact jet of lubricant. The swirl 14 of the scavenging air in the cylinder 1 transports and presses the spray 8 against the cylinder liner 2 such that an even distribution of lubricant on the cylinder liner 2 is achieved. This lubrication system is known in the field as Swirl Injection Principle, SIP. However, also other principles are envisaged in connection with the improved lubrication system, for example injectors that have jets directed towards the cylinder liner.

Optionally, the cylinder liner 2 is provided with free outs 6 for providing adequate space for the spray 8 or jet from the injector 4.

The injectors 4 receive a first type of lubricant through a first feed conduit 9A, typically through a common first feed conduit 9A, from a first lubricant supply 29A, for example oil circuit, of the engine including a potential lubricant pump that raises the pressure of the lubricant to an adequate level. For example, the pressure in the feed conduit 9 is in the range of 25 to 100 bar, optionally 30 to 80 bar, which is a typical range of pressure for SIP valves.

In addition, the injectors 4 receive a second type of lubricant through a second feed conduit 9B, typically through a common second feed conduit 9B, from a second lubricant supply 29B. The injectors 4 are configured with an internal valve system to selectively switch from an idle state to injection of the first or the second lubricant. By switching between different types of lubricant, for example oils with low and high BN, respectively, the lubrication can be optimized to the engine state and the type of fuel.

The injectors 4 are provided with electrical connectors 10' that are electrically communicating with a controller 11 through electrical cables 10. The controller 11 sends electrical control signals to the injectors 4 for controlling injection of lubricant by the injector 4 through the nozzle 5. As it is illustrated, one cable 10 is provided for each injector 4, which allows individual control of injection by the respective injector 4. However, it is also possible to provide one electrical cable 10 from the controller 11 to all injectors 4, such that all injectors 4 are injecting simultaneously upon receiving an electrical control signal through one single electrical cable 10. Alternatively, it is also possible to provide one electrical cable 10 from the controller 11 to a subgroup of injectors, for example a subgroup of 2, 3, 4, 5 or 6 injectors, such that a first subgroup is controlled by the controller through a first cable 10 and a second subgroup is controlled through a second cable 10. The number of cables and subgroups are selective dependent on preferred configurations.

The electrical control signals from the controller 11 to the injectors 4 are provided in precisely timed pulses, synchronised with the piston motion in the cylinder 1 of the engine. For example, for the synchronisation, the controller system 11 comprises a computer 11' or is electronically connected a computer 11', by wires or wireless, where the computer 11' monitors parameters for the actual state and motion of the engine, for example speed, load, and position of the crankshaft, where the latter reveals the position of the pistons in the cylinders.

The computer 11' and the controller 11 are optionally combined. The controller 10 in cooperation with the computer 11' determines the time length of the injection-phase by the time-length in which current is provided through the electrical cable or cables 10.

Also, the type of signal from the controller 11 determines whether the first or second lubricant is injected.

In the following, injectors 4 are explained for use in a system of FIG. 1. However, the injectors 4 can also be used in other engine cylinder lubrication systems without the necessity of using SIP injection.

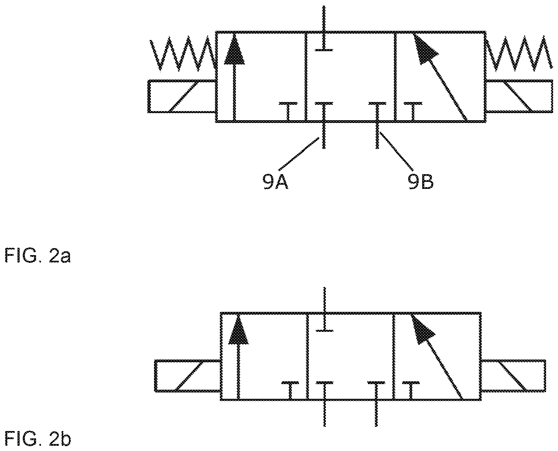

FIG. 2a and FIG. 2b illustrate diagrams of optional valve principles of a selection-valve systems inside the injectors 4 for selecting between throughput to the nozzle 5 from the first lubricant feed conduit 9A or the second lubricant feed conduit 9B. FIG. 2a illustrates a valve with spring return and FIG. 2b without spring return. Injectors 4 with each of such principle will be explained with reference to the drawings below.

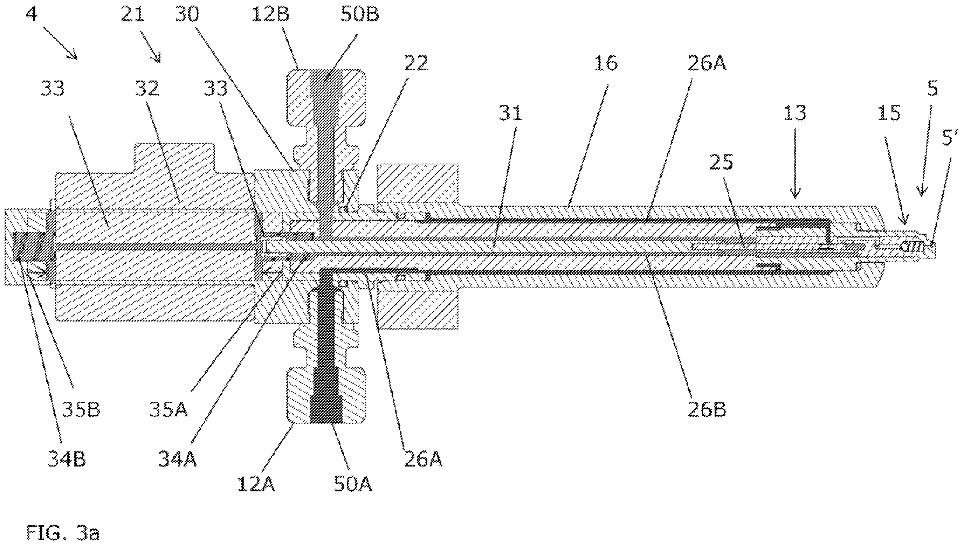

FIG. 3a illustrates an example of an injector 4 for mounting on the cylinder of the engine as explained in relation to FIG. 1. As will be explained below, the injector 4 comprises a selection-valve system 13 for selectively injecting the first or a second lubricant into the engine through the nozzle 5.

The housing 21 of the injector 4 comprises a base 30 and a tubular flow chamber 16, which is a rigid hollow rod that rigidly connects the base 30 with the nozzle 5. The flow chamber 16 is sealed against the base 30 by an O-ring 22.

The base 30 comprises a first lubricant inlet 12A for receiving a first lubricant 50A from the first lubricant feed conduit 9A. It also comprises a second lubricant inlet 12B for receiving a second lubricant 50B from the second lubricant feed conduit 9B. The first lubricant 50A is of a different type than the second lubricant 50B. The first and second lubricant inlets 12A, 12B are fluid-flow communicating through first and second canals 26A, 26B with the selection-valve system 13 for selecting the first or second type of lubricant 50A, 50B for injection. The first and second canals 26A, 26B extend longitudinally inside flow chamber 16.

The housing 21 is typically mounted to the cylinder 1 of the engine such that the lubricant inlets 12A, 12B are outside the cylinder wall 3, and the flow chamber 16 extends through the engine cylinder wall 3 for positioning the nozzle aperture 5' inside the cylinder wall 3.

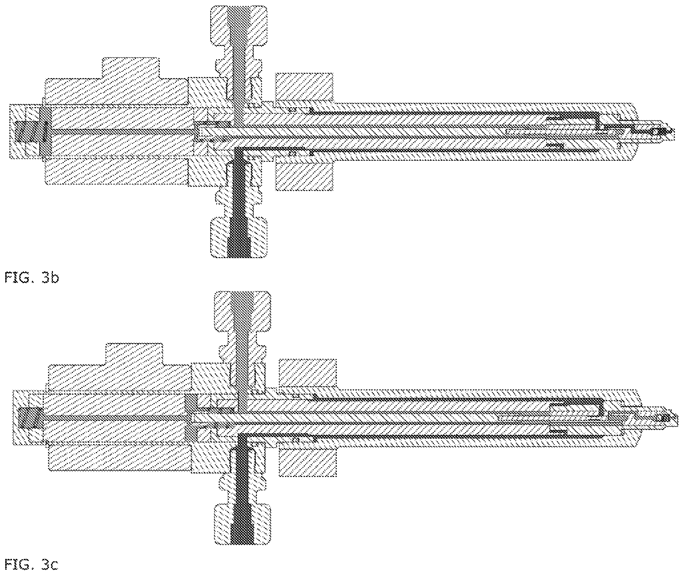

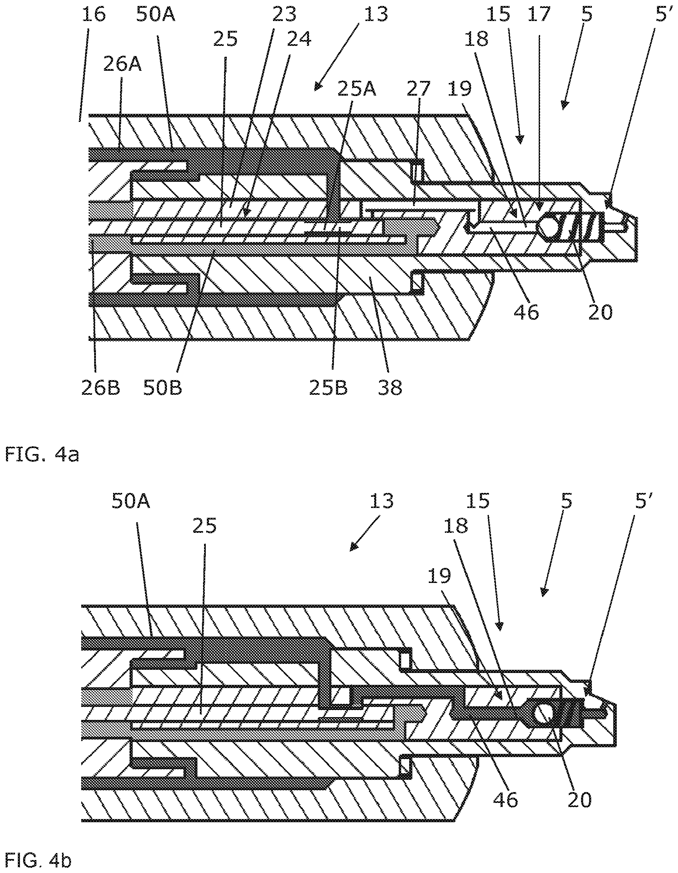

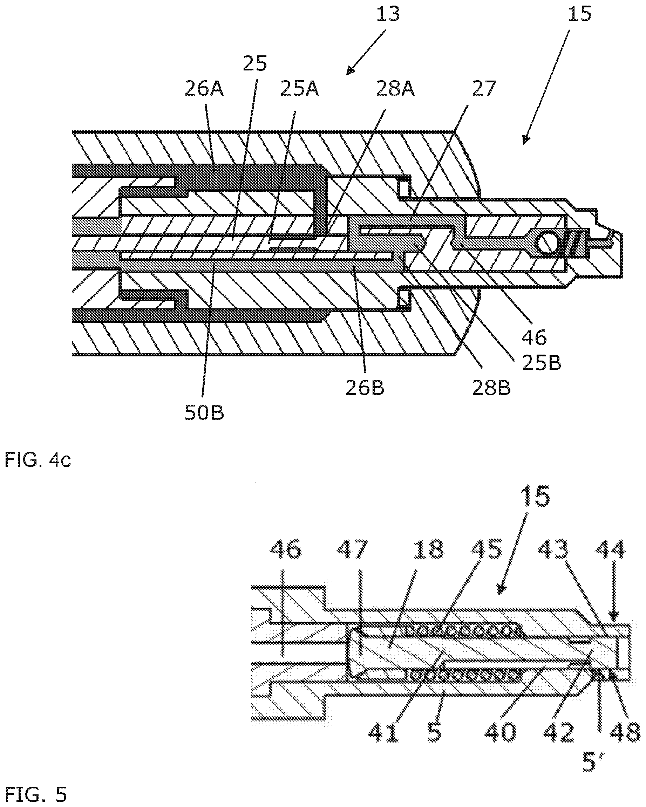

The selection-valve system 13 is operated by an actuator, which in the exemplified embodiment of FIG 3 and FIG. 4 is a linear actuator, connected to the selection-valve system 13 by an actuator extension 31, which is a stem in the illustrated embodiment. The linear actuator is exemplified as an electrical solenoid actuator with a solenoid coil 32 and a solenoid plunger 33.

Optionally, in order to increase the speed of the actuator, a first magnet 39 is provided on one side of the plunger 33. When the solenoid coil 32 is energized by current in one direction, the plunger 32 is magnetized with a first polarity such that the first magnet 39A will attract the plunger and assist in moving it towards the first magnet 39A. If the coil 32 is energized by current in the opposite direction, the plunger 33 is magnetized in an opposite polarity the first magnet will repel the plunger 33. Optionally also a second magnet 39B is provided and positioned on the opposite side of the plunger 33 and will assist in attracting and repelling the plunger. Consequently, the reaction time and the movement of the plunger 33 is increased. Typically, the magnets 39A, 39B are permanent magnets. Alternatively, the magnet 39A or 39B or both magnets 39A, 39B are electromagnets with a corresponding coil (not shown) and optionally a magnetized core, where the coils that are energized for providing additional force on the plunger 33, when the movable plunger 33 is magnetized by the solenoid coil 32.

As alternative to a solenoid, piezoelectric elements are potentially used for driving the actuator-extension 31 or for substituting the actuator extension 31 and solenoid 32, 33. Such piezo-electric elements can be integrated in the flow chamber 16 and potentially integrated in the selection-valve system 13 and reduce the overall size of the injector 4, as the solenoid actuator can be avoided.

By adjustment of the activation time in which the actuator-extension 31 is moved between positions or orientations, the injection time is regulated. This way, the selection-valve system 13 is also configured for regulating the amount of the lubricant as received from the respective lubricant feed conduit 9A, 9B and delivered to the nozzle 5 through the flow chamber 16 during an injection-phase.

In the current configuration, the selection-valve system 13 is provided in the flow chamber 16 and closer to the nozzle aperture 5' than to the base 30 in order to keep the flow path from the selection-valve system 13 to the nozzle 5 short for optimum precision. However, the selection-valve system 13 could also be provided in the flow chamber 16 nearer to the base 30 or be provided in the base 30.

For regulating the lubricant that is dispensed through the nozzle aperture 5' the injector 4 also comprising an outlet-valve system 15.

FIG. 4a illustrates an enlarged view of the selection-valve system 13 and the outlet valve system 15. The nozzle 5 and selection-valve system 13 in FIG. 4 are useful for the solenoid actuator 32, 33 as illustrated in FIG. 3 but can also be used for other types of actuators, including pneumatic and hydraulic actuators, optionally operated by electical signals, for example by operating electromechanical actuator-valves by the controller 11.

The outlet valve system 15 is typically provided as part of the nozzle 5. In the shown embodiment, the nozzle 5 is part of a unit 38 that is fastened to the flow chamber 16 and partly inside the flow chamber 16. However, the selection-valve system 13 could alternatively be provided upstream of the nozzle 5 inside the flow chamber or even inside the base 30.

A nozzle channel 46 in connection with a downstream channel 27 fluid-flow connects the selection-valve system 13 with the outlet valve system 15 for flow of lubricant from the selection-valve system 13 to the outlet valve system 15.

The outlet-valve system 15 comprises a non-return outlet-valve 17. In the non-return outlet-valve 17, an outlet-valve member 18, exemplified as a ball, is pre-stressed against an outlet-valve seat 19 by an outlet-valve spring 20. Upon provision of pressurised lubricant in nozzle channel 46, the pre-stressed forced of the outlet-valve spring 20 is counteracted by the lubricant pressure, and when the pressure gets higher than the spring force, the outlet-valve member 18 is displaced from its outlet-valve seat 19, and the non-return outlet-valve 17 opens for injection of lubricant through the nozzle aperture 5' into the cylinder 1. As exemplified, the outlet-valve spring 20 acts on the outlet-valve member 18 in a direction away from the nozzle aperture 5'. The closing of the non-return outlet-valve 17 in an idle-state prevents unintended flow of lubricant from the flow chamber 16 through the nozzle aperture 5' into the cylinder 1 between injection-phases.

FIG. 5 illustrates an alternative embodiment of an outlet-valve system 15. The generalised principle of the outlet-valve system 15 is similar to the one disclosed in WO2014/048438. A nozzle aperture 5' is provided in the nozzle tip 44 for ejection of lubricant. Inside a cavity 40 of the nozzle 5, an outlet-valve member 18 is provided, the outlet-valve member 18 comprising a stem 41 and a cylindrical sealing head 42 which is arranged slidingly in a cylindrical cavity part 43 at the nozzle tip 44. The position of the valve member 18 is pre-stressed backwards away from the nozzle tip 44 by a spring 45 and is offset forwards by oil pressure acting through the nozzle channel 46 on the back part 47 of the stem 41, the oil pressure acting against the spring force. The nozzle aperture 5' is sealingly covered by the sealing head 42, the surface 48 of which abuts the cylindrical cavity part 43 at the nozzle tip 44, unless the valve member 18 is pushed forward by elevated pressure in the nozzle channel 46 such that the sealing head 43 slides pass and away from the nozzle aperture 5' to allow lubricant oil to flow from the inner cavity 40 through the nozzle aperture 5' for ejection.

With reference to FIG. 4a, the selection-valve system 13 is now explained in greater detail. It comprises a stationary valve member 23 that comprises a longitudinal bushing 24 in which a selection-valve member 25 is slidingly arranged for reciprocation and toggling between the various injection states. The selection-valve member 25 is tightly fitting inside the bushing 24 such that lubricant is not flowing between the outer side of the selection-valve member 25 and the inner side of the bushing 24, at least not to an extent that would influence the lubrication injection but potentially sufficient for lubricating the selection-valve member 25 inside the bushing 24.

The selection-valve system 13 comprises a first throughput section 25A, which is exemplified as a narrowing waist section 25A of the selection-valve member 25. This first throughput section 25A is fluid-flow connected to the first canal 26A in which pressurized first lubricant 50A is provided.

As illustrated in FIG. 4b, by moving the selection-valve member 25 forward towards the nozzle aperture 5', the first throughput section 25A fluid-flow connects the first canal 26A with a downstream canal 27, which is fluid flow connected with the nozzle channel 46, such that first lubricant 50A flows from the first canal 26A through the first throughput section 25A into the downstream canal 27, through the nozzle channel 46 and through the nozzle valve system 15 and out of the nozzle aperture 5'. Due to the increased pressure on the nozzle channel 46, the ball valve member 18 in the outlet valve system 15 is lifted off its seat 19, and the first lubricant can flow through the outlet valve system 15.

With reference to FIG. 4c, the selection-valve system 13 comprises a second throughput section 25B, which is exemplified as a canal section 25B, in front of the forward most end of the selection-valve member 25. This second throughput section 25B is fluid-flow connected to a second canal 26B in which pressurized second lubricant 50B is provided. When the selection-valve member 25 is displaced rearwards, which is in a direction away from the nozzle exit 5', the second canal 26B is fluid-flow connected to the downstream canal 27 through the second throughput section 25B so that the pressurized second lubricant 50B can flow through the nozzle channel 46 and through the outlet valve system 15 and out of the nozzle aperture 5' into the cylinder 1 of the engine.

The selection-valve system 13 is exemplified by a first throughput section 25A, which is exemplified as a narrowing waist section 25A of the selection-valve member 25, which in the idle state of the selection-valve system 13 is fluid-flow connected to the first canal 26A and which during forward displacement connects the first canal 26A with the downstream canal 27. Alternatively, the waist section 25A is connected to the downstream canal 27 in the idle state, and the selection-valve member 25 is configured for connecting the downstream canal 27 with the first canal 26A through the waist section 25A during a first displacement. Optionally, in such configuration, the selection-valve member 25 is configured for connecting the downstream canal 27 with the second canal 26B during a second displacement, which is opposite to the first displacement. By moving the selection-valve member in the forward or rearward direction, the waist section connects the downstream canal 27 with one of the first canal 26A and second canal 26B.

Whereas FIG. 4a is an enlarged section of the nozzle 5 from FIG. 3a, FIG. 4b and FIG. 4c are enlarged sections of the nozzle from FIG. 3b and 3c, respectively. With reference to FIG. 3a, 3b, and 3c, it is observed that the selection-valve member 25 is displaced forward or rearward by an actuator extension 31.

The reciprocal displacement of the selection-valve member 25 is provided by an actuator-extension 31, exemplified as a pull-push-rod, which is fastened to a reciprocal plunger 33 that is driven by a solenoid coil 32. The plunger 33 and the actuator-extension 31 move together and are reversely spring loaded by a first helical spring 34A and forward spring loaded by a second helical spring 34B so as to be balanced into a middle position for the idle state. When the solenoid coil 32 is excited by electrical current in one or the opposite way, the solenoid plunger 33 is moved forward towards the nozzle 5 or rearwards away from the nozzle 5, pushing or dragging the actuator-extension 31 and the selection-valve member 25 along with it. The forward motion is delimited by a first stop 35A and the rearward motion by a second stop 35B. The most forward position of the plunger 33 against the first stop 35A is illustrated in FIG. 3b, and the most rearward position of the plunger 33 against the second stop 35B is illustrated in FIG. 3c. The effect of the second lubricant 50B being provided at both ends of the plunger 33 reduces pressure load on the plunger 33.

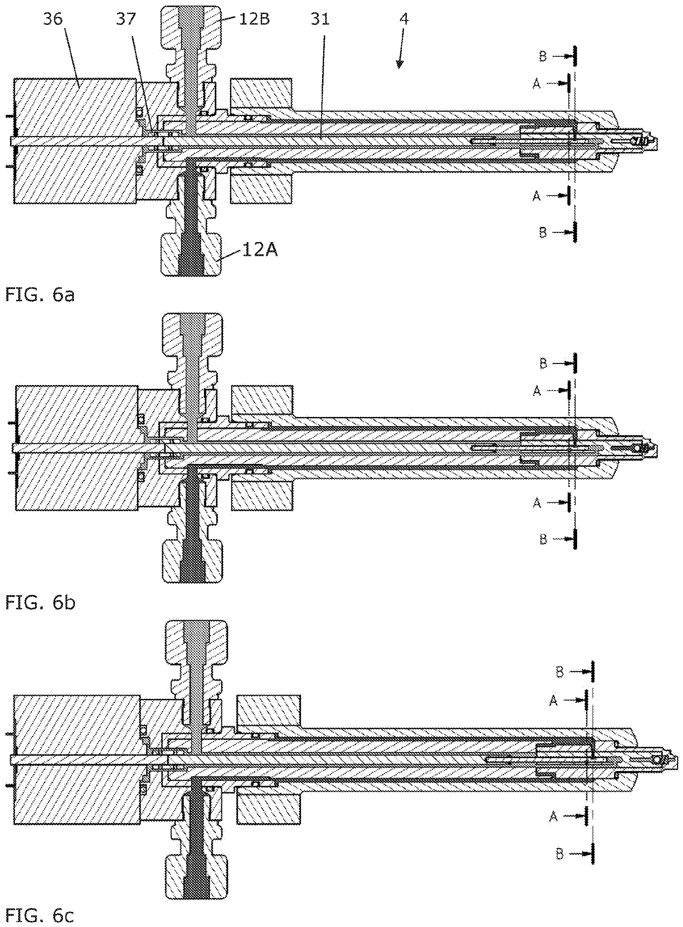

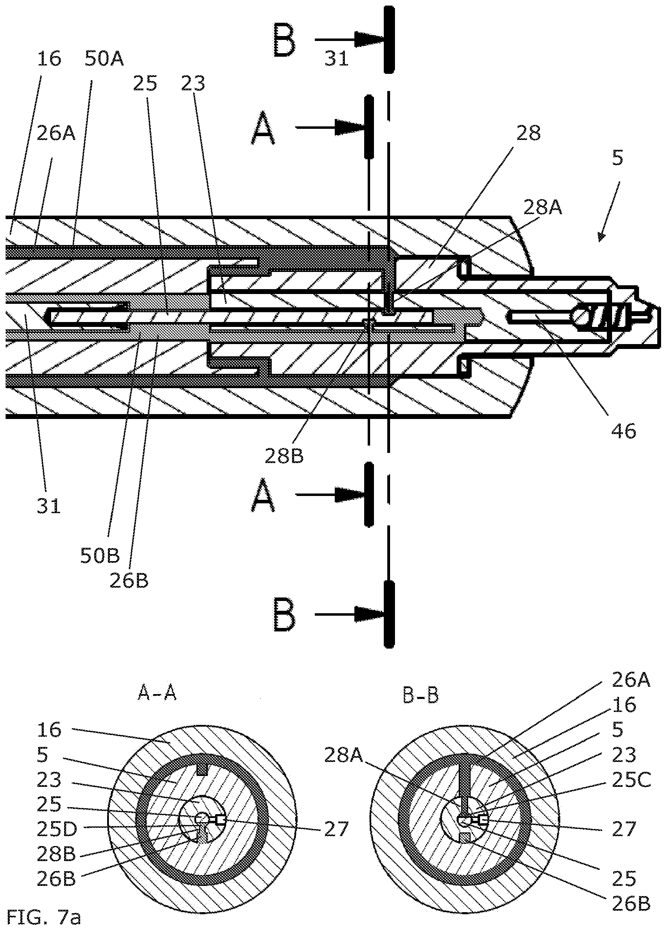

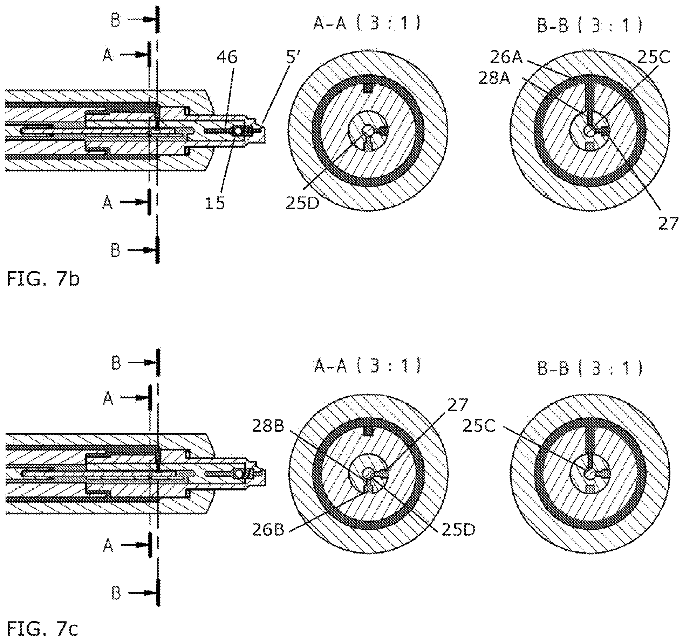

FIG. 6a, FIG. 6b, and FIG. 6c illustrate injectors 4 that are alternative embodiments to the embodiments of FIG. 3 in that the linear solenoid coil/plunger combination is substituted by a rotational actuator 36 so that the actuator-extension 31 is rotated instead and stabilized by a rotational bearing 37. As the components in FIG. 6 are similar to FIG. 6, a repetition of the numbering for similar components has been avoided. However, in order to explain the function in detail, reference is made to FIG. 7a, FIG. 7b, FIG 7c, which are enlarged sections of the nozzle 5 with corresponding cross sectional illustrations and detailed numbering.

FIG. 7a illustrates the nozzle 5 and flow chamber 16 in enlarged view. The stationary valve member 23 comprises a first transverse channel 28A that is connected to the first canal 26A for the first lubricant 50A. Longitudinally offset in the stationary valve member 23 is a second transverse channel 28B that is connected to the second canal 26B for the second lubricant 50B. The rotational selection-valve member 25 comprises a first throughput section 25C at the location of the first transverse channel 28A, and a second throughput section 25D at the location of the second transverse channel 28B. The throughput sections 25C and 25D are provided as local chamfered regions on opposite sides of the rotational selection-valve member 25.

In FIG. 7a, the first throughput section 25C is rotated into an orientation where it only communicate with the first canal 26A but not with the downstream canal 27. The second throughput section 25D is rotated into an orientation where it only communicate with the second canal 26B but not with the downstream canal 27. Similar to the downstream canal 27 of FIG. 4a, the downstream canal 27 in FIG. 7a communicates with the nozzle channel 46.

When the selection-valve member 25 is rotated 45 degrees in one direction, as illustrated in FIG. 7b, the first throughput section 25C connects the first canal 26A with the downstream canal 27, so that first lubricant 50A can flow from the first canal 26A, through the first transverse canal 28A, through the first throughput section 25C, into the downstream canal 27 and to the nozzle channel 46. From the nozzle channel 46, the first lubricant 50A flows through the outlet valve system 15 and is injected through the nozzle aperture 5' into the cylinder 1
When the selection-valve member 25 is rotated 45 degrees in the other direction, as illustrated in FIG. 7c, the second throughput section 25D connects the second canal 26B with the downstream canal 27, so that second lubricant 50B can flow from the second canal 26B, through the second transverse canal 28B, through the second throughput section 25B, into the downstream canal 27 and to the nozzle channel 46. From the nozzle channel 46, the second lubricant 50B flows through the outlet valve system 15 and is injected through the nozzle aperture 5' into the cylinder 1
Although, the selection-valve systems 13 have been illustrated for two lubricants 50A, 50B, it is possible to extend the selection-valve systems 13 to more than two lubricants. For example, in the embodiment with the reciprocal selection-valve member 23, the throughput section 25A can be arranged displaceable to a different position for connecting a third canal with the downstream canal 27 similarly to the connection of the first canal 26A with the downstream canal 27 through the throughput section 25A. For the rotational selection-valve member, a third transverse canal from a third canal can be provided, and a further throughput section be provided in the rotational selection-valve member at a third position and with an angular offset from the first and second throughput sections 25C, 25D. Such throughput section would be rotationally aligned with the downstream canal 27 for injection of a third lubricant.

### Numbering

1 cylinder
2 cylinder liner
3 cylinder wall
4 lubricant injector
5 nozzle
5' nozzle aperture
6 free cut in liner
7 miniature droplets
8 atomised spray from a single injector 4
9A first feed conduit for supplying first lubricant 50A
9B second feed conduit for supplying second lubricant 50B
10 electrical signal cable
10' electrical connectors between electrical signal cable 10 and solenoid in injector 4
11 controller
11' computer
12A first lubricant inlet of injector 4 for first lubricant 50A
12B second lubricant inlet of injector 4 for second lubricant 50B
13 selection-valve system of injector 4
14 swirl in cylinder
15 outlet-valve system of injector 4
16 flow chamber connecting base 30 with nozzle 5
17 outlet non-return valve, exemplified as outlet ball valve
18 outlet-valve member, exemplified as ball
19 outlet-valve seat
20 outlet-valve spring
21 injector housing
22 O-ring at end of flow chamber 16
23 stationary valve member
24 bushing around selection-valve member 25
25 electrically-driven selection-valve member
25A throughput section, exemplified as narrowing section of the reciprocal valve member 25
25B canal section
25C first throughput section in rotational embodiment
25D second throughput section in rotational embodiment
26A first canal for first lubricant 50A
26B second canal for second lubricant 50B
27 downstream canal between selection-valve system 13 and nozzle channel 46
28A first transverse canal
28B second transverse canal
29A first lubricant supply
29B second lubricant supply
30 base of injector housing 21
31 actuator-extension
32 solenoid coil
33 plunger in solenoid coil 32
34A first spring
34B second spring
35A first stop for forward motion
35B second stop for rearward motion
36 rotational actuator
37 rotational bearing
38 unit with nozzle 5
39A, 39B first and second magnet
40 cavity
41 stem
42 cylindrical sealing head
43 cylindrical cavity part
44 nozzle tip
45 spring
46 nozzle channel
47 back part of the stem 41
48 surface of sealing head 42
50A, 50B, first and second type of lubricant

## Claims

1. An combustion engine comprising a cylinder (1) with a reciprocal piston inside; the engine comprising a first lubricant supply (29A) with a pressurized first lubricant (50A) and a second lubricant supply (29B) with a second pressurized lubricant (50B); wherein the first lubricant (50A) is of a different type than the second lubricant (50B); the engine comprising a plurality of lubricant injectors (4) distributed along a perimeter of the cylinder (1) and fixed to a wall (3) of the cylinder (1) and extending through the cylinder wall (3), wherein the injectors (4) are configured for lubricant injection into the cylinder (1) at various positions on the perimeter; wherein each of the plurality of injectors (4) is connected to the first lubricant supply (29A) though a first feed conduit (9A) for injecting the first lubricant (50A) into the cylinder (1) and to the second lubricant supply (29B) through a second lubricant feed conduit (9B) for injecting the second lubricant (50B) into the cylinder (1); wherein each of the injectors is configured for selectively injecting the first or the second lubricant (50A, 50B); the engine further comprising a controller (11) for controlling the amount and timing of injection of the first and second lubricant (50A, 50B) by the plurality of injectors (4);
**characterized in that** each injector (4) comprises
- a first lubricant inlet (12A) for receiving the pressurized first lubricant (50A) from the first lubricant feed conduit (9A) and a second lubricant inlet (12B) for receiving the pressurized second lubricant (50b) from the second lubricant feed conduit (9A);
- at least one nozzle (5) with a nozzle aperture (5') extending into the cylinder (1) for lubricant injecting in an injection-phase;
- a lubricant flow path from the first and second lubricant inlet (12A, 12B) to the at least one nozzle (5) for lubricant flow from the first and second lubricant inlet (12A, 12B) through the at least one nozzle (5) into the cylinder (1);
- an actuator-driven selection-valve system (13) in the lubricant flow path, wherein the selection-valve system (13) is configured for selectively switching from an idle state to injection of the first or the second lubricant (50A, 50B) into the cylinder (1) through the at least one nozzle (5) in the injection-phase; wherein each injector (4) comprises an actuator (32, 33) for driving the selection-valve system (13), wherein the actuator (32, 33) is functionally connected to the controller (11) and configured for being activated by the controller (11) for selectively driving the selection-valve system (13) to cause injection of the first lubricant (50A) or the second lubricant (50B) under control by the controller (11) as a consequence of the activation of the actuator (32, 33) by the controller (11).

2. Engine according to claim 1, wherein the actuator is an electrically controlled actuator (32, 33) that is electrically connected to the controller (11) by an electrical connection (10, 10') for receiving injection-phase signals from the controller (11), the injection-phase signals indicating selection of the first or second lubricant (50A, 50B) by the selection-valve system (13) as well as timing for the injection.

3. Engine according to claim 1 or 2, wherein the selection-valve system (13) comprises a movable selection-valve member (25) that is connected to the actuator (32, 33, 36) for being driven by the actuator (32, 33, 36) from an idle-phase position or orientation, in which the selection-valve member (25) in the idle-phase blocks the flow path, selectively to a first or second injection-phase position or orientation; wherein the selection-valve member (25) in dependence of the injection-phase signal opens the flow path for the first lubricant (50A) when in the first injection-phase position or orientation or opens the flow path for the second lubricant (50B) when in the second injection-phase position or orientation for flow of the lubricant through the flow path and into the cylinder in the injection-phase.

4. Engine according to any preceding claim, wherein the flow path comprises a first canal (26A) from the first inlet (12A) to the selection-valve system (13) and a second canal (26b) from the second inlet (12B) to the selection-valve system (13), and a third canal (27) from the selection-valve system (13) towards the nozzle aperture (5'), wherein the selection-valve system (13) is configured for selectively opening for flow of the first lubricant (50A) from the first canal (26A) into the third canal (27) or flow of the second lubricant (50B) from the second canal (26B) into the third canal (27).

5. A method for lubricating a combustion engine comprising a cylinder (1) with a reciprocal piston inside; the engine comprising a first lubricant supply (29A) with a pressurized first lubricant (50A) and a second lubricant supply (29B) with a second pressurized lubricant (50B); wherein the first lubricant (50A) is of a different type than the second lubricant (50B); the engine comprising a plurality of lubricant injectors (4) distributed along a perimeter of the cylinder (1) and fixed to a wall (3) of the cylinder (1) and extending through the cylinder wall (3), wherein the injectors (4) are configured for lubricant injection into the cylinder (1) at various positions on the perimeter; wherein each of the plurality of injectors (4) is connected to the first lubricant supply (29A) though a first feed conduit (9A) for injecting the first lubricant (50A) into the cylinder (1) and to the second lubricant supply (29B) through a second lubricant feed conduit (9B) for injecting the second lubricant (50B) into the cylinder (1); wherein each of the injectors is configured for selectively injecting the first or the second lubricant (50A, 50B); the engine further comprising a controller (11) for controlling the amount and timing of injection of the first and second lubricant (50A, 50B) by the plurality of injectors (4);
**characterized in that** each injector (4) comprises
- a first lubricant inlet (12A) for receiving the pressurized first lubricant (50A) from the first lubricant feed conduit (9A) and a second lubricant inlet (12B) for receiving the pressurized second lubricant (50b) from the second lubricant feed conduit (9A);
- at least one nozzle (5) with a nozzle aperture (5') extending into the cylinder (1) for lubricant injecting in an injection-phase;
- a lubricant flow path from the first and second lubricant inlet (12A, 12B) to the at least one nozzle (5) for lubricant flow from the first and second lubricant inlet (12A, 12B) through the at least one nozzle (5) into the cylinder (1);
- an actuator-driven selection-valve system (13) in the lubricant flow path, wherein the selection-valve system (13) is configured for selectively switching from an idle state to injection of the first or the second lubricant (50A, 50B) into the cylinder (1) through the at least one nozzle (5) in the injection-phase; wherein each injector (4) comprises an actuator (32, 33) for driving the selection-valve system (13), wherein the actuator (32, 33) is functionally connected to the controller (11) and configured for being activated by the controller (11) for selectively driving the selection-valve system (13) to cause injection of the first or the second lubricant under control by the controller (11) as a consequence of the activation of the actuator (32, 33) by the controller (11);
wherein the method comprises activating the actuator (32, 33) by the controller (11) for starting an injection-phase with the first lubricant (50A) or the second lubricant (50B), and as a consequence thereof causing the selection-valve system (13) to open for flow of the first or the second lubricant (50A, 50B) through the flow path and injecting the first or second lubricant (50A, 50B) lubricant into the cylinder (1); at the end of the injection-phase, causing the actuator to close the selection-valve system (13) for lubricant supply.

6. Method according to claim 5, wherein the actuator (32, 33, 36) is an electrically controlled actuator that is electrically connected to the controller (11) by an electrical connection (10, 10') for receiving the injection-phase signals from the controller (11); the injection-phase signals indicating selection of the first or second lubricant (50A, 50B) for injection as well as timing for the injection; wherein the method comprises receiving the injection-phase signal by the actuator (32, 33, 36) and in dependence of the injection-phase signal opening the flow path for injection of the first or second lubricant (50A, 50B) into the cylinder (1).

7. Method according to claim 6, wherein the selection-valve system (13) comprises a movable selection-valve member (25) that is connected to the actuator (32, 33, 36) for being driven by the actuator (32, 33, 36) from an idle-phase position or orientation, in which the selection-valve member (25) in the idle-phase blocks the flow path, selectively to a first or second injection-phase position or orientation; wherein the selection-valve member (25) in dependence of the injection-phase signal opens the flow path for the first lubricant (50A) when the selection-valve member (25) is in the first injection-phase position or orientation or opens the flow path for the second lubricant (50B) when the selection-valve member (25) is in the second injection-phase position or orientation for flow of the lubricant through the flow path and into the cylinder in the injection-phase, wherein the method comprises receiving the injection-phase signal by the actuator (32, 33, 36) and moving the selection-valve member (25) by the actuator (32, 33, 36) in dependence of the injection-phase signal to a first or second injection-phase position or orientation and correspondingly opening the flow path for injection of the first or second lubricant (50A, 50B) into the cylinder (1).

8. Method according to any one of the claims 5-7, wherein the flow path comprises a first canal (26A) from the first inlet (12A) to the selection-valve system (13) and a second canal from the second inlet (12B) to the selection-valve system (13), and a third canal (27) from the selection-valve system (13) towards the nozzle aperture (5'), wherein the method comprises selectively opening for flow of the first lubricant (50A) from the first canal (26A) into the third canal (27) or opening for flow of the second lubricant (50B) from the second canal (26B) into the third canal (27) by the selection-valve system (13).

9. A lubricant injector for mounting through one of a plurality of identical injection openings along a perimeter of cylinder wall (1) of a combustion engine;
**characterized in that** the lubricant injector comprises
- a first lubricant inlet (12A) for receiving the pressurized first lubricant (50A) from the first lubricant feed conduit (9A) and for injecting the first lubricant (50A) into the cylinder (1) and a second lubricant inlet (12B) for receiving the pressurized second lubricant (50B) from the second lubricant feed conduit (9A) and for injecting the second lubricant (50B) into the cylinder (1);
- at least one nozzle (5) with a nozzle aperture (5') extending into the cylinder (1) for lubricant injecting in an injection-phase;
- a lubricant flow path from the first and second lubricant inlet (12A, 12B) to the at least one nozzle (5) for lubricant flow from the first and second lubricant inlet (12A, 12B) through the at least one nozzle (5) into the cylinder (1);
- an actuator-driven selection-valve system (13) in the lubricant flow path, wherein the selection-valve system (13) is configured for selectively switching from an idle state to injection of the first or the second lubricant (50A, 50B) into the cylinder (1) through the at least one nozzle (5) in the injection-phase; wherein each injector (4) comprises an actuator (32, 33) for driving the selection-valve system (13), wherein the actuator (32, 33) is functionally connected to the controller (11) and configured for being activated by the controller (11) for selectively driving the selection-valve system (13) to cause injection of the first or the second lubricant under control by the controller (11) as a consequence of the activation of the actuator (32, 33) by the controller (11).

10. Injector according to claim 9, wherein the actuator (32, 33, 36) is an electrical actuator having an electrically controlled connector (10') for electrical connection to the controller (11) and for receiving injection-phase signals from the controller (11), the injection-phase signals indicating selection between the first or second lubricant (50A, 50B) for injection as well as timing for the injection.

11. Injector according to claim 9 or 10, wherein the selection-valve system (13) comprises a movable selection-valve member (25) that is connected to the actuator (32, 33, 36) for being driven by the actuator (32, 33, 36) from an idle-phase position or orientation, in which the selection-valve member (25) in the idle-phase blocks the flow path, selectively to a first or second injection-phase position or orientation; wherein the selection-valve member (25) in dependence of the injection-phase signal opens the flow path for the first lubricant (50A) when in the first injection-phase position or orientation or opens the flow path for the second lubricant (50B) when in the second injection-phase position or orientation for flow of the lubricant through the flow path and into the cylinder in the injection-phase.

12. Injector according to anyone of the claims 9-11, wherein the injector comprises only one nozzle (5), wherein the flow path comprises a first canal (26A) from the first inlet (12A) to the selection-valve system (13) and a second canal from the second inlet (12B) to the selection-valve system (13), and a third canal (27) from the selection-valve system (13) towards the nozzle aperture (5'), wherein the selection-valve system (13) is configured for selectively opening for flow of the first lubricant (50A) from the first canal (26A) into the third canal (27) or flow of the second lubricant (50B) from the second canal (26B) into the third canal (27) .

13. Injector according to claim 12, wherein the selection-valve member (25) is cylindrical, and wherein the selection-valve system (13) comprises a stationary valve member (23), the stationary valve member (23) comprising a cylindrical bushing (24) inside which the cylindrical selection-valve member (25) is arranged for at least one of displacing along or rotation about a longitudinal axis of the bushing (24); wherein the selection-valve member (25) comprises at least one throughput section (25A, 25C, 25D) arranged for connecting the first canal (26A) with the third canal (27) when the selection-valve member (25) is in the first position or orientation and for connecting the second canal (26A) with the third canal (27) when the selection-valve member (25) is in the second position or orientation.

14. Injector according to claim 13 wherein the throughput section (26A) is provided as a narrowing section (25A, 25C, 25D) of the selection-valve member (25) for flow of the first lubricant (50A) from the first canal (26A) or the second lubricant (50B) from the second canal (26B) through the narrowing section (25A, 25C, 25D) inside the bushing (54) into the third canal (27) in the injection-phase.

15. Use of an injector according to anyone of the claims 9-14 for SIP injection into the cylinder of a large marine engine or combustion engine for a power plant at a lubricant pressure in the range of 25 bar to 100 bar.

## Patentansprüche

1. Verbrennungsmotor, umfassend einen Zylinder (1) mit einem hin- und hergehenden Kolben im Inneren; wobei der Motor eine erste Schmiermittelversorgung (29A) mit einem druckbeaufschlagten ersten Schmiermittel (50A) und eine zweite Schmiermittelversorgung (29B) mit einem zweiten druckbeaufschlagten Schmiermittel (50B) umfasst; wobei das erste Schmiermittel (50A) von einem anderen Typ als das zweite Schmiermittel (50B) ist; wobei der Motor eine Vielzahl von Schmiermittelinjektoren (4) umfasst, die entlang eines Umfangs des Zylinders (1) verteilt und an einer Wand (3) des Zylinders (1) befestigt sind und sich durch die Zylinderwand (3) erstrecken, wobei die Injektoren (4) dazu konfiguriert sind, an verschiedenen Positionen auf dem Umfang Schmiermittel in den Zylinder (1) einzuspritzen; wobei jeder der Vielzahl von Injektoren (4) zum Einspritzen des ersten Schmiermittels (50A) in den Zylinder (1) über eine erste Zufuhrleitung (9A) mit der ersten Schmiermittelversorgung (29A) und zum Einspritzen des zweiten Schmiermittels (50B) in den Zylinder (1) über eine zweite Schmiermittelzufuhrleitung (9B) mit der zweiten Schmiermittelversorgung (29B) verbunden ist; wobei jeder der Injektoren zum selektiven Einspritzen des ersten oder des zweiten Schmiermittels (50A, 50B) konfiguriert ist; wobei der Motor ferner eine Steuerung (11) zum Steuern der Menge und des Zeitpunkts der Einspritzung des ersten und zweiten Schmiermittels (50A, 50B) durch die Vielzahl von Injektoren (4) umfasst;
**dadurch gekennzeichnet, dass** jeder Injektor (4) Folgendes umfasst:
- einen ersten Schmiermitteleinlass (12A) zum Aufnehmen des druckbeaufschlagten ersten Schmiermittels (50A) aus der ersten Schmiermittelzufuhrleitung (9A) und einen zweiten Schmiermitteleinlass (12B) zum Aufnehmen des druckbeaufschlagten zweiten Schmiermittels (50b) aus der zweiten Schmiermittelzufuhrleitung (9A);
- mindestens eine Düse (5) mit einem Düsendurchlass (5'), der sich zum Einspritzen von Schmiermittel in einer Einspritzphase in den Zylinder (1) erstreckt;
- einen Schmiermittelströmungsweg von dem ersten und zweiten Schmiermitteleinlass (12A, 12B) zu der mindestens einen Düse (5) für Schmiermittelströmung von dem ersten und zweiten Schmiermitteleinlass (12A, 12B) durch die mindestens eine Düse (5) in den Zylinder (1);
- ein aktorangetriebenes Auswahlventilsystem (13) in dem Schmiermittelströmungsweg, wobei das Auswahlventilsystem (13) dazu konfiguriert ist, selektiv aus einem Ruhezustand zu Einspritzen des ersten oder des zweiten Schmiermittels (50A, 50B) in den Zylinder (1) durch die mindestens eine Düse (5) in die Einspritzphase umzuschalten; wobei jeder Injektor (4) einen Aktor (32, 33) zum Antreiben des Auswahlventilsystems (13) umfasst, wobei der Aktor (32, 33) mit der Steuerung (11) funktional verbunden und dazu konfiguriert ist, durch die Steuerung (11) zum selektiven Antreiben des Auswahlventilsystems (13) aktiviert zu werden, um Einspritzung des ersten Schmiermittels (50A) oder des zweiten Schmiermittels (50B) unter Steuerung durch die Steuerung (11) als Folge der Aktivierung des Aktors (32, 33) durch die Steuerung (11) zu bewirken.

2. Motor nach Anspruch 1, wobei der Aktor ein elektrisch gesteuerter Aktor (32, 33) ist, der elektrisch mit der Steuerung (11) durch eine elektrische Verbindung (10, 10') zum Empfangen von Einspritzphasensignalen von der Steuerung (11) verbunden ist, wobei die Einspritzphasensignale eine Auswahl des ersten oder zweiten Schmiermittels (50A, 50B) durch das Auswahlventilsystem (13) sowie einen Zeitpunkt für die Einspritzung angeben.

3. Motor nach Anspruch 1 oder 2, wobei das Auswahlventilsystem (13) ein bewegbares Auswahlventilelement (25) umfasst, das mit dem Aktor (32, 33, 36) verbunden ist, um von dem Aktor (32, 33, 36) aus einer Ruhephasenposition oder -orientierung, wobei das Auswahlventilelement (25) in der Ruhephase den Strömungsweg blockiert, selektiv in eine erste oder zweite Einspritzphasenposition oder -orientierung angetrieben zu werden; wobei das Auswahlventilelement (25) in Abhängigkeit von dem Einspritzphasensignal den Strömungsweg für das erste Schmiermittel (50A) öffnet, wenn es sich in der ersten Einspritzphasenposition oder -orientierung befindet, oder den Strömungsweg für das zweite Schmiermittel (50B) öffnet, wenn es sich in der zweiten Einspritzphasenposition oder -orientierung befindet, damit in der Einspritzphase Schmiermittel durch den Strömungsweg in den Zylinder strömt.

4. Motor nach einem der vorhergehenden Ansprüche, wobei der Strömungsweg einen ersten Kanal (26A) von dem ersten Einlass (12A) zu dem Auswahlventilsystem (13) und einen zweiten Kanal (26b) von dem zweiten Einlass (12B) zu dem Auswahlventilsystem (13) und einen dritten Kanal (27) von dem Auswahlventilsystem (13) in Richtung des Düsendurchlasses (5') umfasst, wobei das Auswahlventilsystem (13) dazu konfiguriert ist, sich selektiv für Strömung des ersten Schmiermittels (50A) aus dem ersten Kanal (26A) in den dritten Kanal (27) oder Strömung des zweiten Schmiermittels (50B) aus dem zweiten Kanal (26B) in den dritten Kanal (27) zu öffnen.

5. Verfahren zum Schmieren eines Verbrennungsmotors, der einen Zylinder (1) mit einem hin- und hergehenden Kolben im Inneren umfasst; wobei der Motor eine erste Schmiermittelversorgung (29A) mit einem druckbeaufschlagten ersten Schmiermittel (50A) und eine zweite Schmiermittelversorgung (29B) mit einem zweiten druckbeaufschlagten Schmiermittel (50B) umfasst; wobei das erste Schmiermittel (50A) von einem anderen Typ als das zweite Schmiermittel (50B) ist; wobei der Motor eine Vielzahl von Schmiermittelinjektoren (4) umfasst, die entlang eines Umfangs des Zylinders (1) verteilt und an einer Wand (3) des Zylinders (1) befestigt sind und sich durch die Zylinderwand (3) erstrecken, wobei die Injektoren (4) dazu konfiguriert sind, an verschiedenen Positionen auf dem Umfang Schmiermittel in den Zylinder (1) einzuspritzen; wobei jeder der Vielzahl von Injektoren (4) zum Einspritzen des ersten Schmiermittels (50A) in den Zylinder (1) über eine erste Zufuhrleitung (9A) mit der ersten Schmiermittelversorgung (29A) und zum Einspritzen des zweiten Schmiermittels (50B) in den Zylinder (1) über eine zweite Schmiermittelzufuhrleitung (9B) mit der zweiten Schmiermittelversorgung (29B) verbunden ist; wobei jeder der Injektoren zum selektiven Einspritzen des ersten oder des zweiten Schmiermittels (50A, 50B) konfiguriert ist; wobei der Motor ferner eine Steuerung (11) zum Steuern der Menge und des Zeitpunkts der Einspritzung des ersten und zweiten Schmiermittels (50A, 50B) durch die Vielzahl von Injektoren (4) umfasst;
**dadurch gekennzeichnet, dass** jeder Injektor (4) Folgendes umfasst:
- einen ersten Schmiermitteleinlass (12A) zum Aufnehmen des druckbeaufschlagten ersten Schmiermittels (50A) aus der ersten Schmiermittelzufuhrleitung (9A) und einen zweiten Schmiermitteleinlass (12B) zum Aufnehmen des druckbeaufschlagten zweiten Schmiermittels (50b) aus der zweiten Schmiermittelzufuhrleitung (9A);
- mindestens eine Düse (5) mit einem Düsendurchlass (5'), der sich zum Einspritzen von Schmiermittel in einer Einspritzphase in den Zylinder (1) erstreckt;
- einen Schmiermittelströmungsweg von dem ersten und zweiten Schmiermitteleinlass (12A, 12B) zu der mindestens einen Düse (5) für Schmiermittelströmung von dem ersten und zweiten Schmiermitteleinlass (12A, 12B) durch die mindestens eine Düse (5) in den Zylinder (1);
- ein aktorangetriebenes Auswahlventilsystem (13) in dem Schmiermittelströmungsweg, wobei das Auswahlventilsystem (13) dazu konfiguriert ist, selektiv aus einem Ruhezustand zu Einspritzen des ersten oder des zweiten Schmiermittels (50A, 50B) in den Zylinder (1) durch die mindestens eine Düse (5) in die Einspritzphase umzuschalten; wobei jeder Injektor (4) einen Aktor (32, 33) zum Antreiben des Auswahlventilsystems (13) umfasst, wobei der Aktor (32, 33) mit der Steuerung (11) funktional verbunden und dazu konfiguriert ist, durch die Steuerung (11) zum selektiven Antreiben des Auswahlventilsystems (13) aktiviert zu werden, um Einspritzung des ersten oder des zweiten Schmiermittels unter Steuerung durch die Steuerung (11) als Folge der Aktivierung des Aktors (32, 33) durch die Steuerung (11) zu bewirken;
wobei das Verfahren Aktivieren des Aktors (32, 33) durch die Steuerung (11) zum Starten einer Einspritzphase mit dem ersten Schmiermittel (50A) oder dem zweiten Schmiermittel (50B) und als Folge davon Veranlassen des Auswahlventilsystems (13), sich für Strömung des ersten oder des zweiten Schmiermittels (50A, 50B) durch den Strömungsweg zu öffnen, und Einspritzen des ersten oder zweiten Schmiermittels (50A, 50B) in den Zylinder (1); am Ende der Einspritzphase, Bewirken, dass sich der Aktor des Auswahlventilsystems (13) zur Schmiermittelversorgung schließt, umfasst.

6. Verfahren nach Anspruch 5, wobei der Aktor (32, 33, 36) ein elektrisch gesteuerter Aktor ist, der über eine elektrische Verbindung (10, 10') zum Empfangen der Einspritzphasensignale von der Steuerung (11) elektrisch mit der Steuerung (11) verbunden ist; wobei die Einspritzphasensignale eine Auswahl des ersten oder zweiten Schmiermittels (50A, 50B) zur Einspritzung sowie einen Zeitpunkt für die Einspritzung angeben; wobei das Verfahren Empfangen des Einspritzphasensignals durch den Aktor (32, 33, 36) und in Abhängigkeit von dem Einspritzphasensignal Öffnen des Strömungswegs zur Einspritzung des ersten oder zweiten Schmiermittels (50A, 50B) in den Zylinder (1) umfasst.

7. Verfahren nach Anspruch 6, wobei das Auswahlventilsystem (13) ein bewegbares Auswahlventilelement (25) umfasst, das mit dem Aktor (32, 33, 36) verbunden ist, um von dem Aktor (32, 33, 36) aus einer Ruhephasenposition oder -orientierung, wobei das Auswahlventilelement (25) in der Ruhephase den Strömungsweg blockiert, selektiv in eine erste oder zweite Einspritzphasenposition oder -orientierung angetrieben zu werden; wobei das Auswahlventilelement (25) in Abhängigkeit von dem Einspritzphasensignal den Strömungsweg für das erste Schmiermittel (50A) öffnet, wenn sich das Auswahlventilelement (25) in der ersten Einspritzphasenposition oder -orientierung befindet, oder den Strömungsweg für das zweite Schmiermittel (50B) öffnet, wenn sich das Auswahlventilelement (25) in der zweiten Einspritzphasenposition oder -orientierung befindet, damit in der Einspritzphase Schmiermittel durch den Strömungsweg in den Zylinder strömt, wobei das Verfahren Empfangen des Einspritzphasensignals durch den Aktor (32, 33, 36) und Bewegen des Auswahlventilelements (25) durch den Aktor (32, 33, 36) in Abhängigkeit von dem Einspritzphasensignal in eine erste oder zweite Einspritzphasenposition oder -orientierung und entsprechendes Öffnen des Strömungswegs zur Einspritzung des ersten oder zweiten Schmiermittels (50A, 50B) in den Zylinder (1) umfasst.

8. Verfahren nach einem der Ansprüche 5-7, wobei der Strömungsweg einen ersten Kanal (26A) von dem ersten Einlass (12A) zu dem Auswahlventilsystem (13) und einen zweiten Kanal von dem zweiten Einlass (12B) zu dem Auswahlventilsystem (13) und einen dritten Kanal (27) von dem Auswahlventilsystem (13) in Richtung des Düsendurchlasses (5') umfasst, wobei das Verfahren selektives Öffnen für Strömung des ersten Schmiermittels (50A) aus dem ersten Kanal (26A) in den dritten Kanal (27) oder Öffnen für Strömung des zweiten Schmiermittels (50B) aus dem zweiten Kanal (26B) in den dritten Kanal (27) durch das Auswahlventilsystem (13) umfasst.

9. Schmiermittelinjektor zum Montieren durch eine von einer Vielzahl von identischen Einspritzöffnungen entlang eines Umfangs einer Zylinderwand (1) eines Verbrennungsmotors;
**dadurch gekennzeichnet, dass** der Schmiermittelinjektor Folgendes umfasst:
- einen ersten Schmiermitteleinlass (12A) zum Aufnehmen des druckbeaufschlagten ersten Schmiermittels (50A) aus der ersten Schmiermittelzufuhrleitung (9A) und zum Einspritzen des ersten Schmiermittels (50A) in den Zylinder (1) und einen zweiten Schmiermitteleinlass (12B) zum Aufnehmen des druckbeaufschlagten zweiten Schmiermittels (50B) aus der zweiten Schmiermittelzufuhrleitung (9A) zum Einspritzen des zweiten Schmiermittels (50B) in den Zylinder (1);
- mindestens eine Düse (5) mit einem Düsendurchlass (5'), der sich zum Einspritzen von Schmiermittel in einer Einspritzphase in den Zylinder (1) erstreckt;
- einen Schmiermittelströmungsweg von dem ersten und zweiten Schmiermitteleinlass (12A, 12B) zu der mindestens einen Düse (5) für Schmiermittelströmung von dem ersten und zweiten Schmiermitteleinlass (12A, 12B) durch die mindestens eine Düse (5) in den Zylinder (1);
- ein aktorangetriebenes Auswahlventilsystem (13) in dem Schmiermittelströmungsweg, wobei das Auswahlventilsystem (13) dazu konfiguriert ist, selektiv aus einem Ruhezustand zu Einspritzen des ersten oder des zweiten Schmiermittels (50A, 50B) in den Zylinder (1) durch die mindestens eine Düse (5) umzuschalten; wobei jeder Injektor (4) einen Aktor (32, 33) zum Antreiben des Auswahlventilsystems (13) umfasst, wobei der Aktor (32, 33) mit der Steuerung (11) funktional verbunden und dazu konfiguriert ist, durch die Steuerung (11) zum selektiven Antreiben des Auswahlventilsystems (13) aktiviert zu werden, um Einspritzung des ersten oder des zweiten Schmiermittels unter Steuerung durch die Steuerung (11) als Folge der Aktivierung des Aktors (32, 33) durch die Steuerung (11) zu bewirken.

10. Injektor nach Anspruch 9, wobei der Aktor (32, 33, 36) ein elektrischer Aktor ist, der einen elektrisch gesteuerten Verbinder (10') zur elektrischen Verbindung mit der Steuerung (11) und zum Empfangen von Einspritzphasensignalen von der Steuerung (11) aufweist, wobei die Einspritzphasensignale eine Auswahl zwischen dem ersten oder zweiten Schmiermittel (50A, 50B) zur Einspritzung sowie den Zeitpunkt für die Einspritzung angeben.

11. Injektor nach Anspruch 9 oder 10, wobei das Auswahlventilsystem (13) ein bewegbares Auswahlventilelement (25) umfasst, das mit dem Aktor (32, 33, 36) verbunden ist, um von dem Aktor (32, 33, 36) aus einer Ruhephasenposition oder - orientierung, wobei das Auswahlventilelement (25) in der Ruhephase den Strömungsweg blockiert, selektiv in eine erste oder zweite Einspritzphasenposition oder -orientierung angetrieben zu werden; wobei das Auswahlventilelement (25) in Abhängigkeit von dem Einspritzphasensignal den Strömungsweg für das erste Schmiermittel (50A) öffnet, wenn es sich in der ersten Einspritzphasenposition oder -orientierung befindet, oder den Strömungsweg für das zweite Schmiermittel (50B) öffnet, wenn es sich in der zweiten Einspritzphasenposition oder -orientierung befindet, damit in der Einspritzphase Schmiermittel durch den Strömungsweg in den Zylinder strömt.

12. Injektor nach einem der Ansprüche 9-11, wobei der Injektor nur eine Düse (5) umfasst, wobei der Strömungsweg einen ersten Kanal (26A) von dem ersten Einlass (12A) zu dem Auswahlventilsystem (13) und einen zweiten Kanal von dem zweiten Einlass (12B) zu dem Auswahlventilsystem (13) und einen dritten Kanal (27) von dem Auswahlventilsystem (13) in Richtung des Düsendurchlasses (5') umfasst, wobei das Auswahlventilsystem (13) dazu konfiguriert ist, sich selektiv für Strömung des ersten Schmiermittels (50A) aus dem ersten Kanal (26A) in den dritten Kanal (27) oder Strömung des zweiten Schmiermittels (50B) aus dem zweiten Kanal (26B) in den dritten Kanal (27) zu öffnen.

13. Injektor nach Anspruch 12, wobei das Auswahlventilelement (25) zylindrisch ist und wobei das Auswahlventilsystem (13) ein stationäres Ventilelement (23) umfasst, wobei das stationäre Ventilelement (23) eine zylindrische Buchse (24) umfasst, innerhalb welcher das zylindrische Auswahlventilelement (25) für mindestens eines von Versetzen entlang einer Längsachse der Buchse (24) oder Drehen um diese angeordnet ist; wobei das Auswahlventilelement (25) mindestens einen Durchsatzabschnitt (25A, 25C, 25D) umfasst, der zum Verbinden des ersten Kanals (26A) mit dem dritten Kanal (27), wenn sich das Auswahlventilelement (25) in der ersten Position oder Orientierung befindet, und zum Verbinden des zweiten Kanals (26A) mit dem dritten Kanal (27), wenn sich das Auswahlventilelement (25) in der zweiten Position oder Orientierung befindet, angeordnet ist.

14. Injektor nach Anspruch 13, wobei der Durchsatzabschnitt (26A) als ein sich verengender Abschnitt (25A, 25C, 25D) des Auswahlventilelements (25) für Strömung des ersten Schmiermittels (50A) aus dem ersten Kanal (26A) oder des zweiten Schmiermittels (50B) aus dem zweiten Kanal (26B) durch den sich verengenden Abschnitt (25A, 25C, 25D) innerhalb der Buchse (54) in den dritten Kanal (27) in der Einspritzphase bereitgestellt ist.

15. Verwendung eines Injektors nach einem der Ansprüche 9-14 zur SIP-Einspritzung in den Zylinder eines großen Schiffsmotors oder eines Verbrennungsmotors für ein Kraftwerk bei einem Schmiermitteldruck in dem Bereich von 25 bar bis 100 bar.

## Revendications

1. Moteur à combustion comprenant un cylindre (1) avec un piston alternatif à l'intérieur ; le moteur comprenant une première alimentation en lubrifiant (29A) avec un premier lubrifiant sous pression (50A) et une seconde alimentation en lubrifiant (29B) avec un second lubrifiant sous pression (50B) ; dans lequel le premier lubrifiant (50A) est d'un type différent du second lubrifiant (50B) ; le moteur comprenant une pluralité d'injecteurs de lubrifiant (4) répartis le long d'un périmètre du cylindre (1) et fixés à une paroi (3) du cylindre (1) et se prolongeant à travers la paroi (3) de cylindre, dans lequel les injecteurs (4) sont configurés pour une injection de lubrifiant dans le cylindre (1) à diverses positions sur le périmètre ; dans lequel chacun de la pluralité d'injecteurs (4) est connecté à la première alimentation en lubrifiant (29A) à travers un premier conduit d'alimentation (9A) pour injecter le premier lubrifiant (50A) dans le cylindre (1) et à la seconde alimentation en lubrifiant (29B) à travers un second conduit d'alimentation en lubrifiant (9B) pour injecter le second lubrifiant (50B) dans le cylindre (1) ; dans lequel chacun des injecteurs est configuré pour injecter sélectivement le premier ou le second lubrifiant (50A, 50B) ; le moteur comprenant également un dispositif de commande (11) pour commander la quantité et le moment d'injection du premier et du second lubrifiant (50A, 50B) par la pluralité d'injecteurs (4) ;
**caractérisé en ce que** chaque injecteur (4) comprend
- une première entrée de lubrifiant (12A) pour recevoir le premier lubrifiant sous pression (50A) à partir du premier conduit d'alimentation en lubrifiant (9A) et une seconde entrée de lubrifiant (12B) pour recevoir le second lubrifiant sous pression (50b) à partir du second conduit d'alimentation en lubrifiant (9A) ;
- au moins une buse (5) avec une ouverture de buse (5') se prolongeant dans le cylindre (1) pour une injection de lubrifiant dans une phase d'injection ;
- un chemin d'écoulement de lubrifiant à partir des première et seconde entrées de lubrifiant (12A, 12B) jusqu'à l'au moins une buse (5) pour un écoulement de lubrifiant à partir des première et seconde entrées de lubrifiant (12A, 12B) à travers l'au moins une buse (5) dans le cylindre (1) ;
- un système de soupape de sélection (13) entraîné par un actionneur dans le chemin d'écoulement de lubrifiant, dans lequel le système de soupape de sélection (13) est configuré pour passer sélectivement d'un état de repos à l'injection du premier ou du second lubrifiant (50A, 50B) dans le cylindre (1) à travers l'au moins une buse (5) dans la phase d'injection ; dans lequel chaque injecteur (4) comprend un actionneur (32, 33) pour entraîner le système de soupape de sélection (13), dans lequel l'actionneur (32, 33) est connecté de manière fonctionnelle au dispositif de commande (11) et configuré pour être activé par le dispositif de commande (11) pour entraîner sélectivement le système de soupape de sélection (13) pour provoquer l'injection du premier lubrifiant (50A) ou du second lubrifiant (50B) sous la commande du dispositif de commande (11) en conséquence de l'activation de l'actionneur (32, 33) par le dispositif de commande (11).

2. Moteur selon la revendication 1, dans lequel l'actionneur est un actionneur à commande électrique (32, 33) qui est connecté électriquement au dispositif de commande (11) par une connexion électrique (10, 10') pour recevoir des signaux de phase d'injection du dispositif de commande (11), les signaux de phase d'injection indiquant une sélection du premier ou du second lubrifiant (50A, 50B) par le système de soupape de sélection (13) ainsi que le moment de l'injection.

3. Moteur selon la revendication 1 ou 2, dans lequel le système de soupape de sélection (13) comprend un élément de soupape de sélection mobile (25) qui est connecté à l'actionneur (32, 33, 36) pour être entraîné par l'actionneur (32, 33, 36) à partir d'une position ou orientation de phase de repos, dans laquelle l'élément de soupape de sélection (25) dans la phase de repos bloque le chemin d'écoulement, sélectivement jusqu'à une première ou seconde position ou orientation de phase d'injection ; dans lequel l'élément de soupape de sélection (25), en fonction du signal de phase d'injection, ouvre le chemin d'écoulement pour le premier lubrifiant (50A) lorsqu'il se trouve dans la première position ou orientation de phase d'injection ou ouvre le chemin d'écoulement pour le second lubrifiant (50B) lorsqu'il se trouve dans la seconde position ou orientation de phase d'injection pour l'écoulement du lubrifiant à travers le chemin d'écoulement et dans le cylindre pendant la phase d'injection.

4. Moteur selon une quelconque revendication précédente, dans lequel le chemin d'écoulement comprend un premier canal (26A) à partir de la première entrée (12A) jusqu'au système de soupape de sélection (13) et un deuxième canal (26b) à partir de la seconde entrée (12B) jusqu'au système de soupape de sélection (13), et un troisième canal (27) à partir du système de soupape de sélection (13) vers l'ouverture de buse (5'), dans lequel le système de soupape de sélection (13) est configuré pour s'ouvrir sélectivement pour l'écoulement du premier lubrifiant (50A) du premier canal (26A) dans le troisième canal (27) ou l'écoulement du second lubrifiant (50B) du deuxième canal (26B) dans le troisième canal (27).

5. Procédé de lubrification d'un moteur à combustion comprenant un cylindre (1) avec un piston alternatif à l'intérieur ; le moteur comprenant une première alimentation en lubrifiant (29A) avec un premier lubrifiant sous pression (50A) et une seconde alimentation en lubrifiant (29B) avec un second lubrifiant sous pression (50B) ; dans lequel le premier lubrifiant (50A) est d'un type différent du second lubrifiant (50B) ; le moteur comprenant une pluralité d'injecteurs de lubrifiant (4) répartis le long d'un périmètre du cylindre (1) et fixés à une paroi (3) du cylindre (1) et se prolongeant à travers la paroi (3) de cylindre, dans lequel les injecteurs (4) sont configurés pour une injection de lubrifiant dans le cylindre (1) à diverses positions sur le périmètre ; dans lequel chacun de la pluralité d'injecteurs (4) est connecté à la première alimentation en lubrifiant (29A) à travers un premier conduit d'alimentation (9A) pour injecter le premier lubrifiant (50A) dans le cylindre (1) et à la seconde alimentation en lubrifiant (29B) à travers un second conduit d'alimentation en lubrifiant (9B) pour injecter le second lubrifiant (50B) dans le cylindre (1) ; dans lequel chacun des injecteurs est configuré pour injecter sélectivement le premier ou le second lubrifiant (50A, 50B) ; le moteur comprenant également un dispositif de commande (11) pour commander la quantité et le moment d'injection du premier et du second lubrifiant (50A, 50B) par la pluralité d'injecteurs (4) ;
**caractérisé en ce que** chaque injecteur (4) comprend
- une première entrée de lubrifiant (12A) pour recevoir le premier lubrifiant sous pression (50A) à partir du premier conduit d'alimentation en lubrifiant (9A) et une seconde entrée de lubrifiant (12B) pour recevoir le second lubrifiant sous pression (50b) à partir du second conduit d'alimentation en lubrifiant (9A) ;
- au moins une buse (5) avec une ouverture de buse (5') se prolongeant dans le cylindre (1) pour une injection de lubrifiant dans une phase d'injection ;
- un chemin d'écoulement de lubrifiant à partir des première et seconde entrées de lubrifiant (12A, 12B) jusqu'à l'au moins une buse (5) pour un écoulement de lubrifiant à partir des première et seconde entrées de lubrifiant (12A, 12B) à travers l'au moins une buse (5) dans le cylindre (1) ;
- un système de soupape de sélection (13) entraîné par un actionneur dans le chemin d'écoulement de lubrifiant, dans lequel le système de soupape de sélection (13) est configuré pour passer sélectivement d'un état de repos à l'injection du premier ou du second lubrifiant (50A, 50B) dans le cylindre (1) à travers l'au moins une buse (5) dans la phase d'injection ; dans lequel chaque injecteur (4) comprend un actionneur (32, 33) pour entraîner le système de soupape de sélection (13), dans lequel l'actionneur (32, 33) est connecté de manière fonctionnelle au dispositif de commande (11) et configuré pour être activé par le dispositif de commande (11) pour entraîner sélectivement le système de soupape de sélection (13) pour provoquer l'injection du premier ou du second lubrifiant sous la commande du dispositif de commande (11) en conséquence de l'activation de l'actionneur (32, 33) par le dispositif de commande (11) ;
dans lequel le procédé comprend l'activation de l'actionneur (32, 33) par le dispositif de commande (11) pour démarrer une phase d'injection avec le premier lubrifiant (50A) ou le second lubrifiant (50B), et en conséquence de cela amener le système de soupape de sélection (13) à s'ouvrir pour l'écoulement du premier ou du second lubrifiant (50A, 50B) à travers le chemin d'écoulement et injecter les premier ou second lubrifiants (50A, 50B) dans le cylindre (1) ; à la fin de la phase d'injection, le fait de provoquer la fermeture par l'actionneur du système de soupape de sélection (13) d'alimentation en lubrifiant.

6. Procédé selon la revendication 5, dans lequel l'actionneur (32, 33, 36) est un actionneur à commande électrique qui est connecté électriquement au dispositif de commande (11) par une connexion électrique (10, 10') pour recevoir les signaux de phase d'injection à partir du dispositif de commande (11) ; les signaux de phase d'injection indiquant une sélection des premier ou second lubrifiants (50A, 50B) pour une injection ainsi que le moment de l'injection ; dans lequel le procédé comprend la réception du signal de phase d'injection par l'actionneur (32, 33, 36) et, en fonction du signal de phase d'injection, l'ouverture du chemin d'écoulement pour une injection des premier ou second lubrifiants (50A, 50B) dans le cylindre (1).

7. Procédé selon la revendication 6, dans lequel le système de soupape de sélection (13) comprend un élément de soupape de sélection mobile (25) qui est connecté à l'actionneur (32, 33, 36) pour être entraîné par 1'actionneur (32, 33, 36) à partir d'une position ou orientation de phase de repos, dans laquelle l'élément de soupape de sélection (25) dans la phase de repos bloque le chemin d'écoulement, sélectivement jusqu'à une première ou seconde position ou orientation de phase d'injection ; dans lequel l'élément de soupape de sélection (25), en fonction du signal de phase d'injection, ouvre le chemin d'écoulement pour le premier lubrifiant (50A) lorsque l'élément de soupape de sélection (25) se trouve dans la première position ou orientation de phase d'injection ou ouvre le chemin d'écoulement pour le second lubrifiant (50B) lorsque l'élément de soupape de sélection (25) se trouve dans la seconde position ou orientation de phase d'injection pour l'écoulement du lubrifiant à travers le chemin d'écoulement et dans le cylindre dans la phase d'injection, dans lequel le procédé comprend la réception du signal de phase d'injection par l'actionneur (32, 33, 36) et le déplacement de l'élément de soupape de sélection (25) par l'actionneur (32, 33, 36) en fonction du signal de phase d'injection jusqu'à une première ou seconde position ou orientation de phase d'injection et l'ouverture de manière correspondante du chemin d'écoulement pour une injection des premier ou second lubrifiants (50A, 50B) dans le cylindre (1).

8. Procédé selon l'une quelconque des revendications 5 à 7, dans lequel le chemin d'écoulement comprend un premier canal (26A) à partir de la première entrée (12A) jusqu'au système de soupape de sélection (13) et un deuxième canal à partir de la seconde entrée (12B) jusqu'au système de soupape de sélection (13), et un troisième canal (27) à partir du système de soupape de sélection (13) vers l'ouverture de buse (5'), dans lequel le procédé comprend l'ouverture sélective pour l'écoulement du premier lubrifiant (50A) du premier canal (26A) dans le troisième canal (27) ou l'ouverture pour l'écoulement du second lubrifiant (50B) du deuxième canal (26B) dans le troisième canal (27) par le système de soupape de sélection (13).

9. Injecteur de lubrifiant destiné à être monté à travers l'une d'une pluralité d'ouvertures d'injection identiques le long d'un périmètre de paroi de cylindre (1) d'un moteur à combustion ;
**caractérisé en ce que** l'injecteur de lubrifiant comprend
- une première entrée de lubrifiant (12A) pour recevoir le premier lubrifiant sous pression (50A) à partir du premier conduit d'alimentation en lubrifiant (9A) et pour injecter le premier lubrifiant (50A) dans le cylindre (1) et une seconde entrée de lubrifiant (12B) pour recevoir le second lubrifiant sous pression (50B) à partir du second conduit d'alimentation en lubrifiant (9A) et pour injecter le second lubrifiant (50B) dans le cylindre (1) ;
- au moins une buse (5) avec une ouverture de buse (5') se prolongeant dans le cylindre (1) pour une injection de lubrifiant dans une phase d'injection ;
- un chemin d'écoulement de lubrifiant à partir des première et seconde entrées de lubrifiant (12A, 12B) jusqu'à l'au moins une buse (5) pour un écoulement de lubrifiant à partir des première et seconde entrées de lubrifiant (12A, 12B) à travers l'au moins une buse (5) dans le cylindre (1) ;
- un système de soupape de sélection (13) entraîné par un actionneur dans le chemin d'écoulement de lubrifiant, dans lequel le système de soupape de sélection (13) est configuré pour passer sélectivement d'un état de repos à l'injection du premier ou du second lubrifiant (50A, 50B) dans le cylindre (1) à travers l'au moins une buse (5) dans la phase d'injection ; dans lequel chaque injecteur (4) comprend un actionneur (32, 33) pour entraîner le système de soupape de sélection (13), dans lequel l'actionneur (32, 33) est connecté de manière fonctionnelle au dispositif de commande (11) et configuré pour être activé par le dispositif de commande (11) pour entraîner sélectivement le système de soupape de sélection (13) pour provoquer l'injection du premier ou du second lubrifiant sous la commande du dispositif de commande (11) en conséquence de l'activation de l'actionneur (32, 33) par le dispositif de commande (11).

10. Injecteur selon la revendication 9, dans lequel l'actionneur (32, 33, 36) est un actionneur électrique ayant un connecteur à commande électrique (10') pour une connexion électrique au dispositif de commande (11) et pour recevoir des signaux de phase d'injection à partir du dispositif de commande (11), les signaux de phase d'injection indiquant une sélection entre les premier ou second lubrifiants (50A, 50B) pour une injection ainsi que le moment de l'injection.

11. Injecteur selon la revendication 9 ou 10, dans lequel le système de soupape de sélection (13) comprend un élément de soupape de sélection mobile (25) qui est connecté à l'actionneur (32, 33, 36) pour être entraîné par 1'actionneur (32, 33, 36) à partir d'une position ou orientation de phase de repos, dans laquelle l'élément de soupape de sélection (25) dans la phase de repos bloque le chemin d'écoulement, sélectivement jusqu'à une première ou seconde position ou orientation de phase d'injection ; dans lequel l'élément de soupape de sélection (25), en fonction du signal de phase d'injection, ouvre le chemin d'écoulement pour le premier lubrifiant (50A) lorsqu'il se trouve dans la première position ou orientation de phase d'injection ou ouvre le chemin d'écoulement pour le second lubrifiant (50B) lorsqu'il se trouve dans la seconde position ou orientation de phase d'injection pour l'écoulement du lubrifiant à travers le chemin d'écoulement et dans le cylindre pendant la phase d'injection.

12. Injecteur selon l'une quelconque des revendications 9 à 11, dans lequel l'injecteur comprend uniquement une buse (5), dans lequel le chemin d'écoulement comprend un premier canal (26A) à partir de la première entrée (12A) jusqu'au système de soupape de sélection (13) et un deuxième canal à partir de la seconde entrée (12B) jusqu'au système de soupape de sélection (13), et un troisième canal (27) à partir du système de soupape de sélection (13) vers une ouverture de buse (5'), dans lequel le système de soupape de sélection (13) est configuré pour s'ouvrir sélectivement pour l'écoulement du premier lubrifiant (50A) à partir du premier canal (26A) dans le troisième canal (27) ou l'écoulement du second lubrifiant (50B) du deuxième canal (26B) dans le troisième canal (27).

13. Injecteur selon la revendication 12, dans lequel l'élément de soupape de sélection (25) est cylindrique, et dans lequel le système de soupape de sélection (13) comprend un élément de soupape fixe (23), l'élément de soupape fixe (23) comprenant une douille cylindrique (24) à l'intérieur de laquelle l'élément de soupape de sélection cylindrique (25) est agencé pour au moins l'un d'un déplacement le long ou d'une rotation autour d'un axe longitudinal de la douille (24) ; dans lequel l'élément de soupape de sélection (25) comprend au moins une section de passage (25A, 25C, 25D) agencée pour connecter le premier canal (26A) au troisième canal (27) lorsque l'élément de soupape de sélection (25) se trouve dans la première position ou orientation et pour connecter le deuxième canal (26A) au troisième canal (27) lorsque l'élément de soupape de sélection (25) se trouve dans la seconde position ou orientation.

14. Injecteur selon la revendication 13, dans lequel la section de passage (26A) est prévue comme une section de rétrécissement (25A, 25C, 25D) de l'élément de soupape de sélection (25) pour l'écoulement du premier lubrifiant (50A) à partir du premier canal (26A) ou du second lubrifiant (50B) à partir du deuxième canal (26B) à travers la section de rétrécissement (25A, 25C, 25D) à l'intérieur de la douille (54) dans le troisième canal (27) dans la phase d'injection.

15. Utilisation d'un injecteur selon l'une quelconque des revendications 9 à 14 pour une injection SIP dans le cylindre d'un moteur marin de grande dimension ou d'un moteur à combustion pour une centrale électrique à une pression de lubrifiant comprise entre 25 bar et 100 bar.
